# EUROPEAN PATENT APPLICATION

(11) **EP 1 657 875 A1**
(43) Date of publication of application: **17.05.2006**
(21) Application number: 04772277.2
(22) Date of filing: 20.08.2004
(51) Int. Cl.: H04L 29/02

(54) **PACKET COMMUNICATION METHOD AND PACKET COMMUNICATION DEVICE**

(30) Priority: 20.08.2003 JP 2003208085; 22.08.2003 JP 2003208440; 05.04.2004 JP 2004111623
(71) Applicant: NIPPON TELEGRAPH AND TELEPHONE CORPORATION, Tokyo 100-8116 (JP)
(72) Inventor: NAGATA, Kengo, C/O NTT Intellectual Pty Center, Musashino-shi, Tokyo 180-8585 (JP); KUMAGAI, Tomoaki, C/O NTT Intellectual Pty Center, Musashino-shi, Tokyo 180-8585 (JP); OTSUKI, Shinya, C/O NTT Intellectual Pty Center, Musashino-shi, Tokyo 180-8585 (JP); SAITO, Kazuyoshi, C/O NTT Intellectual Pty Center, Musashino-shi, Tokyo 180-8585 (JP); AIKAWA, Satoru, C/O NTT Intellectual Pty Center, Musashino-shi, Tokyo 180-8585 (JP); YOSHIOKA, Masafumi, C/O NTT Intellectual Pty Ctr, Musashino-shi, Tokyo 180-8585 (JP)
(74) Representative: HOFFMANN EITLE
(86) International application number: PCT/JP2004/012321
(87) International publication number: WO 2005/020531

(57) **Abstract**

A first communication node, which transmits a packet including a data field and an FCS field, selectively transmits, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node compares an error detection code C generated by performing the prescribed error detection code operation on a received packet with an error detection code F1 contained in the FCS field of the received packet, performs reception processing on the received packet with the understanding that it is classified as the first packet if the error detection codes C and F1 coincide with each other, compares the error detection code C generated by performing the prescribed error detection code operation on the received packet with an error detection code F2 obtained by performing an inverse operation for returning a result of the prescribed operation to an original on the error detection code F1 contained in the FCS field of the received packet, and performs reception processing on the received packet with the understanding that it is classified as the second packet if the error detection codes C and F2 coincide with each other.

## Description

### TECHNICAL FIELD

The present invention relates to a packet communication method and a packet communication apparatus that are used for transmitting plural kinds of packets between communication nodes.

### BACKGROUND ART

In radio packet communication systems in which plural kinds of packets are transmitted, it is necessary to recognize the kind of a received packet and perform processing suitable for it. One method for communicating identification information such a packet is to manipulate a CRC (cyclic redundancy check) code for error detection that is contained in the FCS (frame check sequence) field of the packet (Japanese Patent Gazette No. 3,349,861).

More specifically, to discriminate between two kinds of packets (e.g., a data packet and a control packet), an ordinary CRC code generated by a prescribed CRC operation is contained in the FCS field of one kind of packet and a prescribed code, instead of a CRC code, is contained in the FCS field of the other kind of packet. In a receiving station, an error detection is performed in which a CRC code contained in the FCS field is compared with a CRC code that is generated by performing the prescribed CRC operation on the received packet. If the two CRC codes coincide with each other, the received packet is processed with the understanding that it is of the one kind. If the two CRC codes do not coincide with each other, the received packet is discarded as an erroneous packet or, if the code contained in the FCS field is the prescribed code, processed with the understanding that it is of the other kind.

In the above reference, this method is used for discriminating between a station that performs reception processing on special packets (notification packet and synchronization packet) and a station that discards the special packets. More specifically, station A discards a packet concerned (special packet) if it is judged an erroneous packet. Even if it is judged an erroneous packet, station B processes a packet concerned as a special packet disregarding the fact that it is an erroneous packet if the packet concerned has the prescribed code.

Examples, other than the above-mentioned data packet and control packet, of plural kinds of packets between which a station is required to discriminate are a plurality of control packets that are used for switching between a plurality of access control schemes and a standard-format data packet and a special-format data packet. A radio packet communication system in which special-format data packets are transmitted will be described below.

In conventional radio packet communication methods according to standards, only a single radio channel used is determined in advance and whether this radio channel is free or not is detected (carrier sensing) before transmission of a data packet. One data packet is transmitted only when this radio channel is free. This control allows a plurality of stations to share the single radio channel by time shifting ((1) "MAC and PHY Specification for Metropolitan Area Network," IEEE 802.11, 1998, and (2) Broadband Mobile Access Communication System (CSMA) standard, ARIB SDT-T71 version 1.0, Association of Radio Industries and Businesses, settled on in 2,000).

To increase the transmission efficiency of data packets in those radio packet communication methods, a study is being made of a radio packet communication method for transmitting a plurality of data packets in parallel over a single radio channel utilizing a known SDM (space division multiplexing) or MIMO (multiple input multiple output) technique (Kurosaki et al., "100Mbit/s SDM-COFDM over MIMO Channel for Broadband Mobile Communications," Technical Reports of The Institute of Electronics, Information and Communication Engineers, A-P2001-96, RCS2001-135 (2001-10)). This SDM or MIMO technique is a scheme in which different data packets are transmitted simultaneously from a plurality of antennas over the same radio channel and received through digital signal processing that accommodates differences between propagation coefficients of data packets received by a plurality of antennas of counter stations. A space division multiplexing number is determined in accordance with propagation coefficients and other factors.

To increase the transmission efficiency of data packets, another radio packet communication method is being studied in which each station is equipped with a plurality of wireless network interfaces and a plurality of data packets are transmitted parallel by using a plurality of radio channels if it is found in carrier sensing that those radio channels are free.

A further radio packet communication method is being studied in which data packets are transmitted parallel in a number that is equal to the sum of space division multiplexing numbers of a plurality of radio channels by combining the SDM or MIMO technique and the plurality of radio channels.

In the above methods, if, for example, two free radio channels are available for three data packets, two of the three data packets are transmitted parallel over the two radio channels. If three free radio channels are available for two data packets, all (i.e., two) of the data packets are transmitted parallel over the two radio channels. The same is true of the case of using the SDM or MIMO technique.

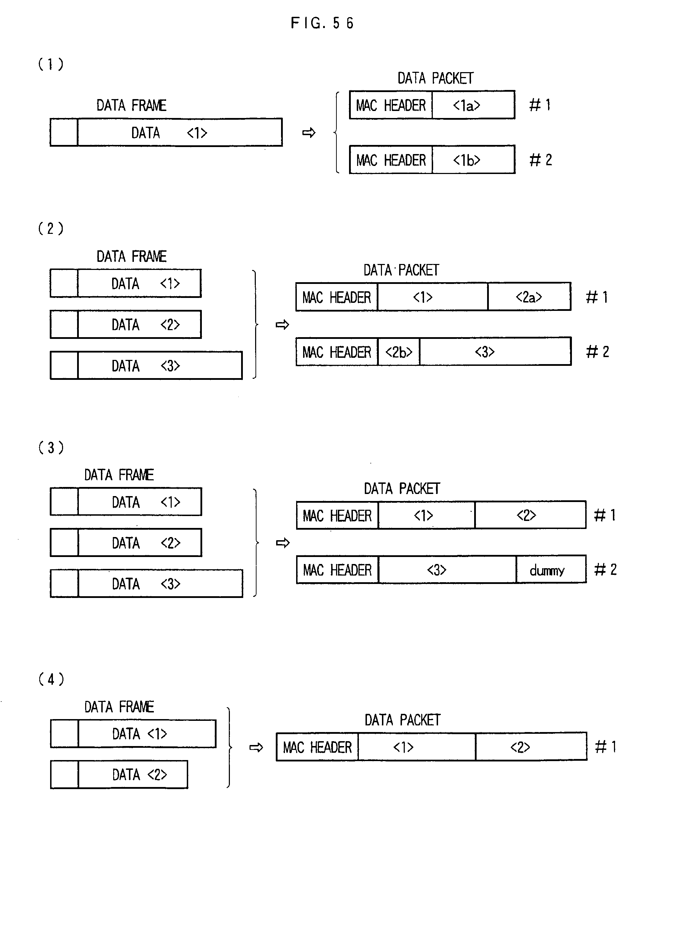

The following three methods are available as a method for generating a plurality of data packets to be transmitted parallel from a data frame. If, for example, there are one data frame and two free channels, two data packets having the same packet time length (defined as a time required for transmitting the data packet) by dividing the data frame as shown in Fig. 56(1). If there are three data frames and two free channels, two data packets having the same packet time length are generated by dividing data frame 2, for example, and combining resulting fragments with data frame 1 and data frame 3, respectively (see Fig. 56(2)). The same result is obtained by combining the three data frames and then dividing a resulting frame into two parts. Fig. 56(3) shows a method in which two data packets having the same packet time length are generated by combining data frame 1 and data frame 2 and adding dummy bits to data frame 3. If a plurality of radio channels used have different transmission rates, the packet time lengths are equalized by adjusting the size ratio of data packets in accordance with a transmission rate ratio.

In wireless LAN systems, one data frame is converted to one MAC (media access control) frame. Therefore, even a data frame whose data field has a small data size is converted to one MAC frame and transmitted as one data packet (radio packet). For example, whereas the maximum size of the data field of the MAC frame of the IEEE 802.11 standard is 2,296 bytes, that of the Ethernet (registered trademark) frame, which is commonly used as a data frame, is as small as 1,500 bytes. Therefore, the maximum size (2,296 bytes) of the data field of the MAC frame has a margin even for a maximum-size Ethernet frame. That is, in the conventional systems, the maximum size of data that can be transmitted by one MAC frame cannot be utilized effectively, which restricts increase in throughput.

In view of the above, to make full use of the data sizes of data packets, a method is being studied in which the data fields of a plurality of data frames are combined to form a single data packet (see Fig. 56(4)). Also in the methods of Figs. 56(2) and 56(3), combining etc. of the data frames are performed within the confines of the maximum size of the MAC frame.

A frame format according to a standard that is based on existing frame fragmentation can accommodate the plurality of data packets that are generated by the frame fragmentation shown in Fig. 56(1). On the other hand, the data packets that are reconfigured by the frame patching shown in Fig. 56(2) or the frame aggregation shown in Fig. 56(3) or 56(4) have a special format that does not comply with a standard.

Naturally, in those special-format data packets, the data fields of the data packets are not in one-to-one correspondence with those of the data frames. On the other hand, although a reception-side station should reconstruct original data frames from received data packets, it cannot do so unless some measure is taken because the received data packets have a packet format that is not expected conventionally. The reasons are as follows.

In actual systems, in, for example, delivering an IP packet of an IP layer to a lower layer, processing of delivering it after dividing it into several data frames is performed. In this case, headers to be used for reconstructing an original IP packet are added at the heads of the data fields of the data frames generated by the division, respectively. When data packets that are formed by data frames generated in this manner are received by a receiving side, data frames are extracted from the data packets and an original IP packet is reconstructed.

In general, a receiving-side IP layer performs IP packet reconstruction processing by automatically recognizing that the head portion of the data field of each received data frame is header information that is necessary for reconstruction of an original IP packet. That is, from the viewpoint of the IP layer, a problem arises unless the head portion of the data field of each received data frame is header information that is necessary for reconstruction of an original IP packet.

However, in the data packets that have been reconfigured in the transmitting side by the above-described frame patching or aggregation, the header information that is necessary for reconstruction of an original IP packet may be located at a position other than the head of the data field of each data frame; the IP layer cannot reconstruct an IP packet unless some measure is taken. Therefore, before reconstructing an IP packet, the receiving side needs to reconstruct, from the received data packets, original data frames that are the same as were used for reconfiguring the data packets.

To reconstruct data frames (that are the same as were used for reconfiguring the data packets) in the receiving side from the special-format data packets that were reconfigured in the transmitting side, information indicating whether or not the data packets have a special format and, if they have a special format, information indicating data frame boundaries and order of the data packets are necessary. However, since fields for transmission of such information are not defined in the standard format, such information needs to be transmitted from the transmitting side to the receiving side using a newly defined special format. However, to employ, in the entire communication system, a special format that is not defined commonly, all the stations constituting the communication system need to be replaced by new apparatus that are compatible with the special format, which necessarily causes cost increase.

Now assume a case in which there exist, in a mixed form, existing stations that handle data packets having a standard format with which one data packet is generated from one data frame and stations that handle data packets having a special format with which one data packet contains patched data fields of a plurality of data frames.

In this case, first, it is necessary that stations that are going to perform a radio packet communication mutually recognize whether they accommodate only the standard format or both of the standard format and the special format by exchanging a request packet and a reply packet. It is then necessary to add, to each special-format data packet, (1) information indicating whether the data packet was reconfigured by frame patching or aggregation, (2) information indicating a data frame boundary, (3) information indicating order of the data packets, and other information.

However, the method of the above-mentioned reference has the following problem in connection with, for example, the discrimination between an ordinary data packet and a control packet such as a request packet or a reply packet and the discrimination between a standard-format data packet and a special-format data packet. In the method of the above-mentioned reference, an ordinary CRC code or a prescribed code is contained in the FCS field and error detection is performed in a receiving side. Even if a packet concerned is an erroneous packet, it is processed as a control packet (the fact that it is an erroneous packet is disregarded) if the packet concerned has the prescribed code. Although this enables discrimination between control packets and ordinary data packets, the error detection works on only ordinary data packets but does not work on control packets. That is, the function of detecting an error in control packets is sacrificed for the discrimination between control packets and ordinary data packets.

An object of the present invention is to realize a packet communication method and a packet communication apparatus capable of performing error detection on each packet reliably while employing a method of manipulating an error detection code contained in the FCS field of each packet to discriminate between plural kinds of packets.

### DISCLOSURE OF INVENTI0N

In the packet communication method set forth in claim 1, a first communication node, which transmits a packet including a data field and an FCS field, selectively transmits, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node compares an error detection code C generated by performing the prescribed error detection code operation on a received packet with an error detection code F1 contained in the FCS field of the received packet, performs reception processing on the received packet with an understanding that it is classified as the first packet if the error detection codes C and F1 coincide with each other, compares the error detection code C generated by performing the prescribed error detection code operation on the received packet with an error detection code F2 obtained by performing an inverse operation for returning a result of the prescribed operation to an original on the error detection code F1 contained in the FCS field of the received packet, and performs reception processing on the received packet with an understanding that it is classified as the second packet if the error detection codes C and F2 coincide with each other.

Performing the inverse operation on the error detection code of a received packet as described above makes it possible to recognize the kind of the received packet in accordance with the error detection code contained in the FCS field and perform corresponding reception processing while performing error detection on the received packet reliably.

In the packet communication method set forth in claim 2, a first communication node, which transmits a packet including a data field and an FCS field, selectively transmits, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node compares an error detection code C generated by performing the prescribed error detection code operation on a received packet with an error detection code F1 contained in the FCS field of the received packet and an error detection code F2 obtained by performing an inverse operation for returning a result of the prescribed operation to an original on the error detection code F1 contained in the FCS field of the received packet, performs reception processing on the received packet with an understanding that it is classified as the first packet if the error detection codes C and F1 coincide with each other, and performs reception processing on the received packet with an understanding that it is classified as the second packet if the error detection codes C and F2 coincide with each other.

Performing the inverse operation on the error detection code of a received packet as described above makes it possible to recognize the kind of the received packet by a single comparison in accordance with the error detection code contained in the FCS field and perform corresponding reception processing while performing error detection on the received packet reliably.

In the packet communication method set forth in claim 3, a first communication node, which transmits a packet including a data field and an FCS field, selectively transmits, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node compares an error detection code C1 generated by performing the prescribed error detection code operation on a received packet with an error detection code F contained in the FCS field of the received packet, performs reception processing on the received packet with an understanding that it is classified as the first packet if the error detection codes C1 and F coincide with each other, compares an error detection code C2 obtained by performing the prescribed operation on the error detection code generated by performing the prescribed error detection code operation on the received packet with the error detection code F contained in the FCS field of the received packet, and performs reception processing on the received packet with an understanding that it is classified as the second packet if the error detection codes C2 and F coincide with each other.

Performing the prescribed error detection code operation on a received packet as described above makes it possible to recognize the kind of the received packet in accordance with the error detection code contained in the FCS field and perform corresponding reception processing while performing error detection on the received packet reliably.

In the packet communication method set forth in claim 4, a first communication node, which transmits a packet including a data field and an FCS field, selectively transmits, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node compares an error detection code C1 generated by performing the prescribed error detection code operation on a received packet and an error detection code C2 obtained by performing the prescribed operation on the error detection code C1 with an error detection code F contained in the FCS field of the received packet, performs reception processing on the received packet with an understanding that it is classified as the first packet if the error detection codes C1 and F coincide with each other, and performs reception processing on the received packet with an understanding that it is classified as the second packet if the error detection codes C2 and F coincide with each other.

Performing the prescribed error detection code operation on a received packet as described above makes it possible to recognize the kind of the received packet by a single comparison in accordance with the error detection code contained in the FCS field and perform corresponding reception processing while performing error detection on the received packet reliably.

In the packet communication method set forth in claim 5, a first communication node, which transmits a packet including a data field and an FCS field, selectively transmits, to a second communication node, a first packet containing, in the FCS field, an error detection code generated by performing a first error detection code operation on a transmission packet or a second packet containing, in the FCS field, an error detection code generated by performing a second error detection code operation on the transmission packet. The second communication node compares an error detection code C1 generated by performing the first error detection code operation on a received packet with an error detection code F contained in the FCS field of the received packet, performs reception processing on the received packet with an understanding that it is classified as the first packet if the error detection codes C1 and F coincide with each other, compares an error detection code C2 generated by performing the second error detection code operation on the received packet with the error detection code F contained in the FCS field of the received packet, and performs reception processing on the received packet with an understanding that it is classified as the second packet if the error detection codes C2 and F coincide with each other.

Performing a plurality of error detection code operations on a received packet as described above makes it possible to recognize the kind of the received packet in accordance with the error detection code contained in the FCS field and perform corresponding reception processing while performing error detection on the received packet reliably.

In the packet communication method set forth in claim 6, a first communication node, which transmits a packet including a data field and an FCS field, selectively transmits, to a second communication node, a first packet containing, in the FCS field, an error detection code generated by performing a first error detection code operation on a transmission packet or a second packet containing, in the FCS field, an error detection code generated by performing a second error detection code operation on the transmission packet. The second communication node compares an error detection code C1 generated by performing the first error detection code operation on a received packet and an error detection code C2 generated by performing the second error detection code operation on the received packet with an error detection code F contained in the FCS field of the received packet, performs reception processing on the received packet with an understanding that it is classified as the first packet if the error detection codes C1 and F coincide with each other, and performs reception processing on the received packet with an understanding that it is classified as the second packet if the error detection codes C2 and F coincide with each other.

Performing a plurality of error detection code operations on a received packet as described above makes it possible to recognize the kind of the received packet by a single comparison in accordance with the error detection code contained in the FCS field and perform corresponding reception processing while performing error detection on the received packet reliably.

In the packet communication method set forth in claim 7, the prescribed operation recited in any one of claims 1 to 4 to be performed on the first error detection code is at least one of reversing all bits of the first error detection code, reversing partial bits of the first error detection code, adding a prescribed value to the first error detection code, and subtracting a prescribed value from the first error detection code.

In the packet communication method set forth in claim 8, two or more kinds of packets are generated as the second packet containing, in the FCS field, the second error detection code obtained by performing the prescribed operation recited in claim 7 on the first error detection code by combining prescribed operations and addition and subtraction of plural kinds of prescribed values, and three or more kinds of packets including the first packet are transmitted and received between the first and second communication nodes.

In the packet communication method set forth in claim 9, according to claim 5 or 6, the first error detection code operation and the second error detection code operation recited in claim 5 or 6 employ different parameters to produce different error detection codes, and three or more kinds of packets containing, in the FCS fields, error detection codes generated by using three or more kinds of parameters, respectively, are transmitted and received between the first and second communication nodes.

In the packet communication method set forth in claim 10, three or more kinds of packets are generated by combining the kind of prescribed operation recited in any one of claims 1 to 4 to be performed on the first error detection code and the kinds of error detection code operations recited in claim 5 or 6, and are transmitted and received between the first and second communication nodes.

In the packet communication method set forth in claim 11, the first and second packets or the three or more kinds of packets recited in any one of claims 1 to 10 are different from each other in frame format. The first communication node puts, into the FCS field of a packet to be transmitted, an error detection code generated by an operation corresponding to a frame format of the packet to be transmitted. The second communication node recognizes a frame format of a received packet by performing an operation on an error detection code of the received packet, and performs reception processing on the received packet on the basis of the recognized frame format.

The packet communication method set forth in claim 12, the frame format recited in claim 11 that corresponds to the error detection code is a prescribed, standard frame format or an unprescribed, special frame format.

In the packet communication method set forth in claim 13, a data portion of a packet of the special frame format recited in claim 12 includes, together with fragments obtained by dividing a data frame or a plurality of data frames, a field containing information that is necessary when the second communication node reconstructs a corresponding data frame from the data packet concerned.

In the packet communication method set forth in claim 14, a plurality of data packets are generated as the data packet recited in claim 13 by performing division, patching, or aggregation on the data frame or frames, and each of the data packets includes a field containing information that is necessary for reconstruction of a data frame.

In the packet communication method set forth in claim 15, the plurality of data packets recited in claim 14 are transmitted parallel by using a plurality of radio channels, a single radio channel and SDM or MIMO, or a plurality of radio channels and SDM or MIMO.

In the packet communication method set forth in claim 16, the plurality of data packets recited in claim 15 are generated so as to have the same packet time length defined as a time necessary for a transmission by adjusting a packet size ratio of the data packets in accordance with a transmission rate ratio of the radio channels.

In the packet communication method set forth in claim 17, a packet of the special frame format recited in claim 12 includes a field containing control information of the communication node.

In the packet communication method set forth in claim 18, a packet of the special frame format recited in claim 12 is provided with a field containing control information of the communication node when a packet of the standard frame format does not have a data portion.

In the packet communication method set forth in claim 19, a packet of the special frame format recited in claim 12 is provided with a field containing transmission data of the communication node when a packet of the standard frame format does not have a data portion.

In the packet communication method set forth in claim 20, a packet of the special frame format recited in claim 12 has an unprescribed frame header.

In the packet communication method set forth in claim 21, the control information recited in claim 17 or 18 is traffic information of the communication node.

In the packet communication method set forth in claim 22, the control information recited in claim 17 or 18 is information that is necessary for handover processing of the communication node.

In the packet communication method set forth in claim 23, the control information recited in claim 17 or 18 is a parameter that is necessary for connection of the communication node to a network.

In the packet communication method set forth in claim 24, the control information recited in claim 1 7 or 18 is information that is necessary for change of a channel access procedure of the communication node.

In the packet communication method set forth in claim 25, the control information recited in claim 17 or 18 is information that relates to a channel allocation time of the communication node.

In the packet communication method set forth in claim 26, the control information recited in claim 17 or 18 is propagation path information, a transmission rate, or information relating to a transmission power control that is detected by the communication node.

In the packet communication method set forth in claim 27, the first and second packets or the three or more kinds of packets recited in any one of claims 1 to 10 have error detection codes generated by operations that are different from each other so as to correspond to respective destinations. The first communication node puts, into the FCS field of a packet to be transmitted, an error detection code generated by an operation corresponding to a destination of the packet to be transmitted. The second communication node performs reception processing on a packet directed to itself that is recognized by performing an operation on an error detection code of a received packet.

In the packet communication method set forth in claim 28, the first and second packets or the three or more kinds of packets recited in any one of claims 1 to 10 have error detection codes generated by operations that are different from each other so as to correspond to the respective kinds of packets. The first communication node puts, into the FCS field of a packet to be transmitted, an error detection code generated by an operation corresponding to a kind of the packet to be transmitted. The second communication node performs reception processing on a packet of a kind that is recognized by performing an operation on an error detection code of a received packet.

In the packet communication method set forth in claim 29, the kind of a packet recited in claim 28 is recognized by an identifier that is contained in the packet and indicates the kind of the packet, and error correction codes corresponding to the respective kinds of packets are used.

In the packet communication method set forth in claim 30, when recognizing reception of a prescribed packet by performing an operation on an error detection code of a received packet, the second communication node recited in claim 28 or 29 performs reply processing to the received packet and manages the first communication node as a communication node capable of special processing.

In the packet communication method set forth in claim 31, when recognizing reception of a prescribed packet by performing an operation on an error detection code of a received packet, the second communication node recited in claim 28 or 29 communicates information indicating presence of a communication node capable of special processing to an upper layer.

In the packet communication method set forth in claim 32, the kind of a packet recited in claim 28 corresponds to information indicating an encryption key of an encrypted data packet, and error detection codes corresponding to respective encryption keys are used.

In the packet communication apparatus set forth in claim 33, a first communication node, which transmits a packet including a data field and an FCS field, comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node comprises means for comparing an error detection code C generated by performing the prescribed error detection code operation on a received packet with an error detection code F1 contained in the FCS field of the received packet, performing reception processing on the received packet with an understanding that it is classified as the first packet if the error detection codes C and F1 coincide with each other, comparing the error detection code C generated by performing the prescribed error detection code operation on the received packet with an error detection code F2 obtained by performing an inverse operation for returning a result of the prescribed operation to an original on the error detection code F1 contained in the FCS field of the received packet, and performing reception processing on the received packet with an understanding that it is classified as the second packet if the error detection codes C and F2 coincide with each other.

Performing the inverse operation on the error detection code of a received packet as described above makes it possible to recognize the kind of the received packet in accordance with the error detection code contained in the FCS field and perform corresponding reception processing while performing error detection on the received packet reliably.

In the packet communication apparatus set forth in claim 34, a first communication node, which transmits a packet including a data field and an FCS field, comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node comprises means for comparing an error detection code C generated by performing the prescribed error detection code operation on a received packet with an error detection code F1 contained in the FCS field of the received packet and an error detection code F2 obtained by performing an inverse operation for returning a result of the prescribed operation to an original on the error detection code F1 contained in the FCS field of the received packet, performing reception processing on the received packet with an understanding that it is classified as the first packet if the error detection codes C and F1 coincide with each other, and performing reception processing on the received packet with an understanding that it is classified as the second packet if the error detection codes C and F2 coincide with each other.

Performing the inverse operation on the error detection code of a received packet as described above makes it possible to recognize the kind of the received packet by a single comparison in accordance with the error detection code contained in the FCS field and perform corresponding reception processing while performing error detection on the received packet reliably.

In the packet communication apparatus set forth in claim 35, a first communication node, which transmits a packet including a data field and an FCS field, comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node comprises means for comparing an error detection code C1 generated by performing the prescribed error detection code operation on a received packet with an error detection code F contained in the FCS field of the received packet, performing reception processing on the received packet with an understanding that it is classified as the first packet if the error detection codes C1 and F coincide with each other, comparing an error detection code C2 obtained by performing the prescribed operation on the error detection code generated by performing the prescribed error detection code operation on the received packet with the error detection code F contained in the FCS field of the received packet, and performing reception processing on the received packet with an understanding that it is classified as the second packet if the error detection codes C2 and F coincide with each other.

Performing the prescribed error detection code operation on a received packet as described above makes it possible to recognize the kind of the received packet in accordance with the error detection code contained in the FCS field and perform corresponding reception processing while performing error detection on the received packet reliably.

In the packet communication apparatus set forth in claim 36, a first communication node, which transmits a packet including a data field and an FCS field, comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code. The second communication node comprises means for comparing an error detection code C1 generated by performing the prescribed error detection code operation on a received packet and an error detection code C2 obtained by performing the prescribed operation on the error detection code C1 with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

Performing the prescribed error detection code operation on a received packet as described above makes it possible to recognize the kind of the received packet by a single comparison in accordance with the error detection code contained in the FCS field and perform corresponding reception processing while performing error detection on the received packet reliably.

In the packet communication apparatus set forth in claim 37, a first communication node, which transmits a packet including a data field and an FCS field, comprises means for selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet. The second communication node comprises means for comparing an error detection code C1 generated by performing the first error detection code operation on a received packet with an error detection code F contained in the FCS field of the received packet, performing reception processing on the received packet with an understanding that it is classified as the first packet if the error detection codes C1 and F coincide with each other, comparing an error detection code C2 generated by performing the second error detection code operation on the received packet with the error detection code F contained in the FCS field of the received packet, and performing reception processing on the received packet with an understanding that it is classified as the second packet if the error detection codes C2 and F coincide with each other.

Performing a plurality of error detection code operations on a received packet as described above makes it possible to recognize the kind of the received packet in accordance with the error detection code contained in the FCS field and perform corresponding reception processing while performing error detection on the received packet reliably.

In the packet communication apparatus set forth in claim 38, a first communication node, which transmits a packet including a data field and an FCS field, comprises means for selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet. The second communication node comprises means for comparing an error detection code C1 generated by performing the first error detection code operation on a received packet and an error detection code C2 generated by performing the second error detection code operation on the received packet with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

Performing a plurality of error detection code operations on a received packet as described above makes it possible to recognize the kind of the received packet by a single comparison in accordance with the error detection code contained in the FCS field and perform corresponding reception processing while performing error detection on the received packet reliably.

In the packet communication apparatus set forth in claim 39, the prescribed operation recited in any one of claims 33 to 36 to be performed on the first error detection code is at least one of reversing all bits of the first error detection code, reversing partial bits of the first error detection code, adding a prescribed value to the first error detection code, and subtracting a prescribed value from the first error detection code.

In the packet communication apparatus set forth in claim 40, two or more kinds of packets are generated as the second packet containing, in the FCS field, the second error detection code obtained by performing the prescribed operation recited in claim 39 on the first error detection code by combining prescribed operations and addition and subtraction of plural kinds of prescribed values, and three or more kinds of packets including the first packet are transmitted and received between the first and second communication nodes.

In the packet communication apparatus set forth in claim 41, the first error detection code operation and the second error detection code operation recited in claim 37 or 38 employ different parameters to produce different error detection codes, and three or more kinds of packets containing, in the FCS fields, error detection codes generated by using three or more kinds of parameters, respectively, are transmitted and received between the first and second communication nodes.

In the packet communication apparatus set forth in claim 42, three or more kinds of packets are generated by combining the kind of prescribed operation recited in any one of claims 33 to 36 to be performed on the first error detection code and the kind of error detection code operations recited in claim 37 or 38, and are transmitted and received between the first and second communication nodes.

In the packet communication apparatus set forth in claim 43, the first and second packets or the three or more kinds of packets recited in any one of claims 33 to 42 are different from each other in frame format. The first communication node puts, into the FCS field of a packet to be transmitted, an error detection code generated by an operation corresponding to a frame format of the packet to be transmitted. The second communication node recognizes a frame format of a received packet by performing an operation on an error detection code of the received packet, and performs reception processing on the received packet on the basis of the recognized frame format.

The packet communication apparatus set forth in claim 44 further comprises means for generating, as the frame format recited in claim 43 that corresponds to the error detection code, a prescribed, standard frame format or an unprescribed, special frame format.

The packet communication apparatus set forth in claim 45 further comprises means for generating a packet of the special frame format recited in claim 44 that includes, in a data portion, together with fragments obtained by dividing a data frame or a plurality of data frames, a field containing information that is necessary when the second communication node reconstructs a corresponding data frame from the data packet concerned.

The packet communication apparatus set forth in claim 46 further comprises means for generating, as the data packet recited in claim 45, a plurality of data packets by performing division, patching, or aggregation on the data frame or frames, and for generating a packet or packets each of which includes a field containing information that is necessary for reconstruction of a data frame.

The packet communication set forth in claim 47 further comprises means for parallel transmitting the plurality of data packets recited in claim 46 by using a plurality of radio channels, a single radio channel and SDM or MIMO, or a plurality of radio channels and SDM or MIMO.

The packet communication apparatus set forth in claim 48 further comprises means for generating the plurality of data packets recited in claim 47 so that they have the same packet time length defined as a time necessary for a transmission by adjusting a packet size ratio of the data packets in accordance with a transmission rate ratio of the radio channels.

The packet communication apparatus set forth in claim 49 further comprises means for generating, as a packet of the special frame format recited in claim 44, a packet that includes a field containing control information of the communication node.

The packet communication apparatus set forth in claim 50 further comprises means for generating, as a packet of the special frame format recited in claim 44, a packet that is provided with a field containing control information of the communication node when a packet of the standard frame format does not have a data portion.

The packet communication apparatus set forth in claim 51 further comprises means for generating, as a packet of the special frame format recited in claim 44, a packet that is provided with a field containing transmission data of the communication node when a packet of the standard frame format does not have a data portion.

The packet communication apparatus set forth in claim 52 further comprises means for generating, as a packet of the special frame format recited in claim 44, a packet having an unprescribed frame header.

The packet communication apparatus set forth in claim 53 further comprises means for measuring traffic information of the communication node and using it as the control information recited in claim 49 or 50.

The packet communication apparatus set forth in claim 54 further comprises means for using, as the control information recited in claim 49 or 50, information that is necessary for handover processing of the communication node.

The packet communication apparatus set forth in claim 55 further comprises means for using, as the control information recited in claim 49 or 50, a parameter that is necessary for connection of the communication node to a network.

The packet communication apparatus set forth in claim 56 further comprises means for using, as the control information recited in claim 49 or 50, information that is necessary for change of a channel access procedure of the communication node.

The packet communication apparatus set forth in claim 57 further comprises means for using, as the control information recited in claim 49 or 50, information that relates to a channel allocation time of the communication node.

The packet communication apparatus set forth in claim 58 further comprises means for using, as the control information recited in claim 49 or 50, propagation path information, a transmission rate, or information relating to a transmission power control that is detected by the communication node.

In the packet communication apparatus set forth in claim 59, the first and second packets or the three or more kinds of packets recited in any one of claims 33 to 42 have error detection codes generated by operations that are different from each other so as to correspond to respective destinations. The first communication node further comprises means for putting, into the FCS field of a packet to be transmitted, an error detection code generated by an operation corresponding to a destination of the packet to be transmitted. The second communication node further comprises means for performing reception processing on a packet directed to itself that is recognized by performing an operation on an error detection code of a received packet.

In the packet communication apparatus set forth in claim 60, the first and second packets or the three or more kinds of packets recited in any one of claims 33 to 42 have error detection codes generated by operations that are different from each other so as to correspond to the respective kinds of packets. The first communication node further comprises means for putting, into the FCS field of a packet to be transmitted, an error detection code generated by an operation corresponding to a kind of the packet to be transmitted. The second communication node further comprises means for performing reception processing on a packet of a kind that is recognized by performing an operation on an error detection code of a received packet.

In the packet communication apparatus set forth in claim 61, the kind of a packet recited in claim 60 is recognized by an identifier that is contained in the packet and indicates the kind of the packet. The packet communication apparatus further comprises means for using the error detection codes corresponding to the respective kinds of packets.

In the packet communication apparatus set forth in claim 62, the second communication node recited in claim 60 or 61 further comprises means for performing reply processing to a received packet and managing the first communication node as a communication node capable of special processing when recognizing reception of a prescribed packet by performing an operation on an error detection code of the received packet.

In the packet communication apparatus set forth in claim 63, the second communication node recited in claim 60 or 61 further comprises means for communicating information indicating presence of a communication node capable of special processing to an upper layer when recognizing reception of a prescribed packet by performing an operation on an error detection code of a received packet.

In the packet communication apparatus set forth in claim 64, the kind of a packet recited in claim 60 corresponds to information indicating an encryption key of an encrypted data packet. The packet communication apparatus further comprises means for using error detection codes corresponding to respective encryption keys.

### BRIEF DESCRIPTION OF DRAWINGS

Fig. 1 shows a packet communication method according to a first embodiment of the present invention;
Fig. 2 shows a packet communication method according to a second embodiment of the invention;
Fig. 3 shows a packet communication method according to a third embodiment of the invention;
Fig. 4 shows a packet communication method according to a fourth embodiment of the invention;
Fig. 5 shows a packet communication method according to a fifth embodiment of the invention;
Fig. 6 shows a packet communication method according to a sixth embodiment of the invention;
Fig. 7 shows a packet communication method according to a seventh embodiment of the invention;
Fig. 8 shows Example 1 of the invention;
Fig. 9 shows frame structures of a control packet and beacon packets having control information that are transmitted between communication nodes;
Fig. 10 shows Example 2 of the invention;
Fig. 11 shows a frame structure of a beacon packet having control information that is transmitted between communication nodes;
Fig. 12 shows Example 3 of the invention;
Fig. 13 shows a frame structure of a beacon packet having control information that is transmitted between communication nodes;
Fig. 14 shows Example 4 of the invention;
Fig. 15 5 shows a frame structure of a beacon packet having control information that is transmitted between communication nodes;
Fig. 16 shows Example 5 of the invention;
Fig. 17 shows frame structures of a beacon packet having control information and a data packet having control information that are transmitted between communication nodes;
Fig. 18 shows Example 6 of the invention;
Fig. 19 shows a frame structure of a beacon packet having control information that is transmitted between communication nodes;
Fig. 20 shows Example 7 of the invention;
Fig. 21 shows frame structures of standard-format and special-format beacon packets that are transmitted between communication nodes;
Fig. 22 shows Example 8 of the invention;
Fig. 23 shows a frame structure of a data packet having control information that is transmitted between communication nodes;
Fig. 24 shows Example 9 of the invention;
Fig. 25 shows a frame structure of a polling packet having control information that is transmitted between communication nodes;
Fig. 26 shows Example 10 of the invention;
Fig. 27 shows a frame structure of a data packet having control information that is transmitted between communication nodes;
Fig. 28 shows Example 11 of the invention;
Fig. 29 shows a frame structure of an ACK packet having control information that is transmitted between communication nodes;
Fig. 30 shows Example 12 of the invention;
Fig. 31 shows Example 13 of the invention;
Fig. 32 shows a frame structure of an ACK packet having data that is transmitted between communication nodes;
Fig. 33 illustrates Example 14 of the invention;
Fig. 34 shows a frame structure of special-format packet that is transmitted between communication nodes;
Fig. 35 shows Example 15 of the invention;
Fig. 36 shows Example 16 of the invention;
Fig. 37 shows Example 17 of the invention;
Fig. 38 shows Example 18 of the invention;
Fig. 39 shows Example 19 of the invention;
Fig. 40 shows Example 20 of the invention;
Fig. 41 shows Example 21 of the invention;
Fig. 42 shows Example 21 of the invention;
Fig. 43 is a flowchart showing a communication function check process of a station A that corresponds to Example 21;
Fig. 44 is a flowchart showing a data packet transmission process 1 of the station A that corresponds to Example 21;
Fig. 45 is a flowchart showing a data packet transmission process 2 of the station A that corresponds to Example 21;
Fig. 46 is a flowchart showing a data packet reception process of a station B that corresponds to Example 21;
Fig. 47 shows Example 22 of the invention;
Fig. 48 is a flowchart showing a communication function check process of a station A that corresponds to Example 22;
Fig. 49 is a flowchart showing a data packet transmission process 1 of the station A that corresponds to Example 22;
Fig. 50 is a flowchart showing a data packet transmission process 2 of the station A that corresponds to Example 22;
Fig. 51 is a flowchart showing a data packet transmission process 3 of the station A that corresponds to Example 22;
Fig. 52 is a flowchart showing a data packet transmission process 4 of the station A that corresponds to Example 22;
Fig. 53 is a flowchart showing a data packet reception process 1 of a station B that corresponds to Example 22;
Fig. 54 is a flowchart showing a data packet reception process 2 of the station B that corresponds to Example 22;
Fig. 55 is a block diagram showing the configuration of an exemplary packet communication apparatus according to the invention; and
Fig. 56 illustrates methods for generating one or a plurality of data packets from a plurality of data frames in which parts (1)-(4) illustrate frame fragmentation, frame patching, frame aggregation, and frame aggregation, respectively.

### BEST MODE FOR CARRYING OUT THE INVENTION

### (Embodiment 1)

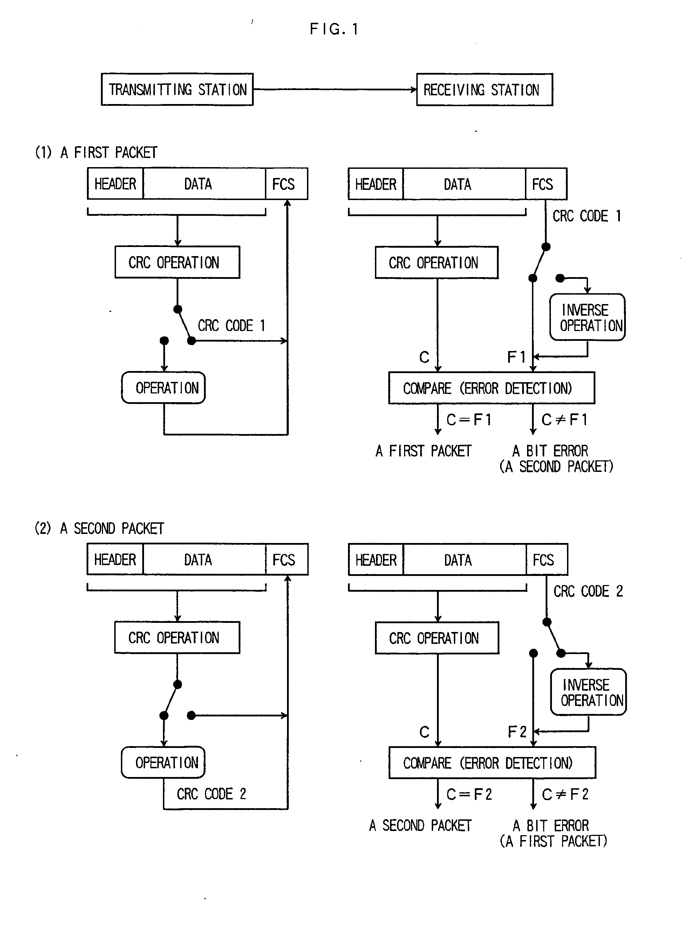

Fig. 1 shows a packet communication method according to a first embodiment of the present invention. In the first to seventh embodiments, it is assumed that a first packet and a second packet to be discriminated from each other are, for example, a standard-format data packet and a special-format data packet or a control packet 1 to be used for setting of mode 1 and a control packet 2 to be used for setting of mode 2.

As shown in Fig. 1, when a transmitting station transmits a first packet, a CRC code 1 generated by a prescribed CRC operation is put into the FCS field (see part (1)). When the transmitting station transmits a second packet, a CRC code 2 obtained by converting, through a prescribed operation, a CRC code that is generated by the prescribed CRC operation is put into the FCS field (see part (2)). The prescribed operation includes at least one of the bit reversal of all or part of the bits of the CRC code 1, the addition or subtraction of a prescribed value to or from the CRC code 1, and a combination from those operations.

A receiving station performs error detection on a received packet. More specifically, a CRC code (C) generated by the prescribed CRC operation is compared with a CRC code (F1) contained in the FCS field of the received packet. If the codes C and F1 coincide with each other, the received packet is recognized as a first packet and subjected to reception processing. On the other hand, if the codes C and F1 do not coincide with each other, the CRC code C is compared with a CRC code (F2) that is obtained by subjecting the CRC code contained in the FCS field of the received packet to the inverse of the operation performed in the transmitting side. If the codes C and F2 coincide with each other, the received packet is recognized as a second packet and subjected to the reception processing. An alternative procedure is possible in which the error detection using codes C and F2 is performed first to judge whether a received packet is a second packet and then error detection using codes C and F1 is performed to judge whether the received packet is a first packet.

If the codes C and F1 do not coincide with each other and the codes C and F2 do not coincide with each other, the received packet is discarded with the understanding that it includes a bit error. In this manner, both of the first packet and the second packet can be recognized through the error detection.

### (Embodiment 2)

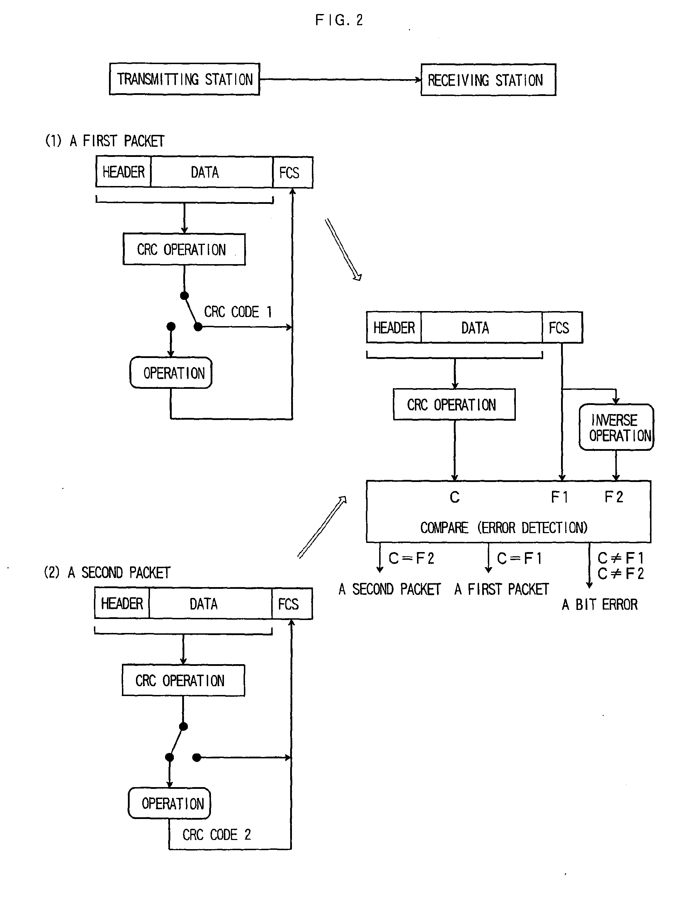

Fig. 2 shows a packet communication method according to a second embodiment of the invention. As shown in Fig. 2, when a transmitting station transmits a first packet, a CRC code 1 generated by a prescribed CRC operation is put into the FCS field (see part (1)). When the transmitting station transmits a second packet, a CRC code 2 obtained by converting, through a prescribed operation, a CRC code that is generated by the prescribed CRC operation is put into the FCS field (see part (2)).

A receiving station performs error detection on a received packet. More specifically, a CRC code (C) generated by the prescribed CRC operation is compared with a CRC code (F1) contained in the FCS field of the received packet as well as a CRC code (F2) that is obtained by subjecting the CRC code contained in the FCS field of the received packet to the inverse of the operation performed in the transmitting side. If the codes C and F1 coincide with each other, the received packet is recognized as a first packet and subjected to reception processing. If the codes C and F2 coincide with each other, the received packet is recognized as a second packet and subjected to the reception processing.

If the codes C and F1 do not coincide with each other and the codes C and F2 do not coincide with each other, the received packet is discarded with the understanding that it includes a bit error. In this manner, both of the first packet and the second packet can be recognized through the error detection.

### (Embodiment 3)

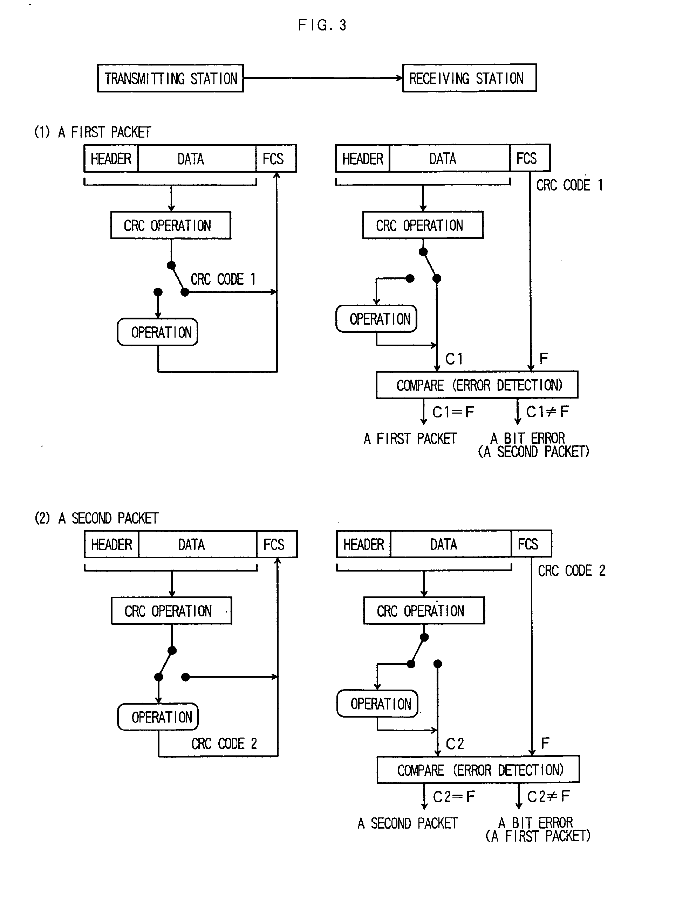

Fig. 3 shows a packet communication method according to a third embodiment of the invention. As shown in Fig. 3, when a transmitting station transmits a first packet, a CRC code 1 generated by a prescribed CRC operation is put into the FCS field (see part (1)). When the transmitting station transmits a second packet, a CRC code 2 obtained by converting, through a prescribed operation, a CRC code that is generated by the prescribed CRC operation is put into the FCS field (see part (2)).

A receiving station performs error detection on a received packet. More specifically, a CRC code (C1) generated by the prescribed CRC operation is compared with a CRC code (F) contained in the FCS field of the received packet. If the codes C1 and F coincide with each other, the received packet is recognized as a first packet and subjected to reception processing. On the other hand, if the codes C1 and F do not coincide with each other, a CRC code (C2) that is obtained by subjecting the CRC code (C1) to the same operation as performed in the transmitting side is compared with the CRC code (F) that is contained in the FCS field of the received packet. If the codes C2 and F coincide with each other, the received packet is recognized as a second packet and subjected to the reception processing. An alternative procedure is possible in which the error detection using codes C2 and F is performed first to judge whether a received packet is a second packet and then error detection using codes C1 and F is performed to judge whether the received packet is a first packet.

If the codes C1 and F do not coincide with each other and the codes C2 and F do not coincide with each other, the received packet is discarded with the understanding that it includes a bit error. In this manner, both of the first packet and the second packet can be recognized through the error detection.

### (Embodiment 4)

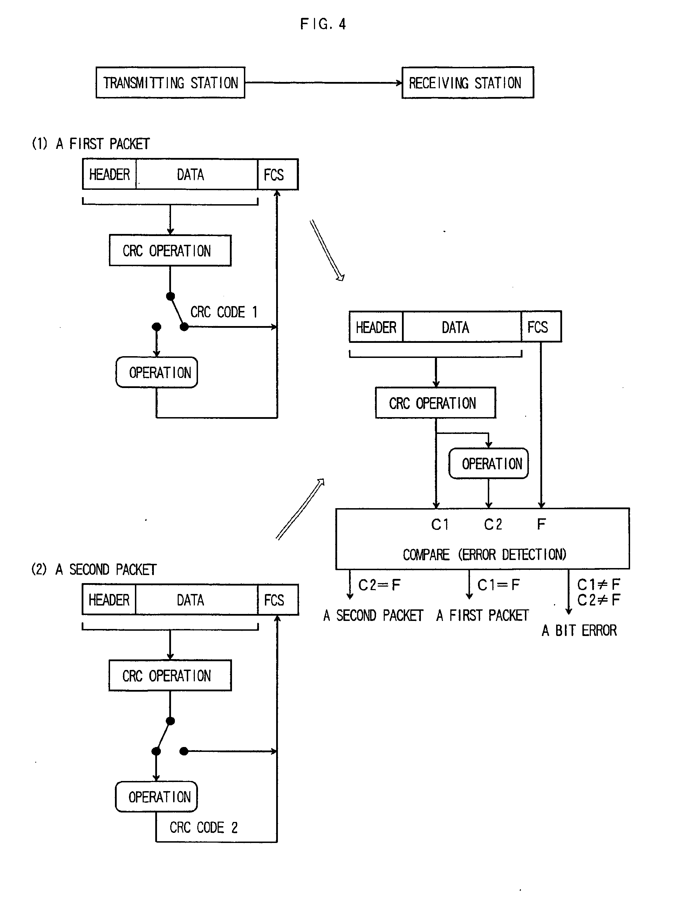

Fig. 4 shows a packet communication method according to a fourth embodiment of the invention. As shown in Fig. 4, when a transmitting station transmits a first packet, a CRC code 1 generated by a prescribed CRC operation is put into the FCS field (see part (1)). When the transmitting station transmits a second packet, a CRC code 2 obtained by converting, through a prescribed operation, a CRC code that is generated by the prescribed CRC operation is put into the FCS field (see part (2)).

A receiving station performs error detection on a received packet. More specifically, a CRC code (C1) generated by the prescribed CRC operation and a CRC code (C2) obtained by subjecting the CRC code (C1) to the same operation as performed in the transmitting side are compared with a CRC code (F) contained in the FCS field of the received packet. If the codes C1 and F coincide with each other, the received packet is recognized as a first packet and subjected to reception processing. If the codes C2 and F coincide with each other, the received packet is recognized as a second packet and subjected to the reception processing.

If the codes C1 and F do not coincide with each other and the codes C2 and F do not coincide with each other, the received packet is discarded with the understanding that it includes a bit error. In this manner, both of the first packet and the second packet can be recognized through the error detection.

### (Embodiment 5)

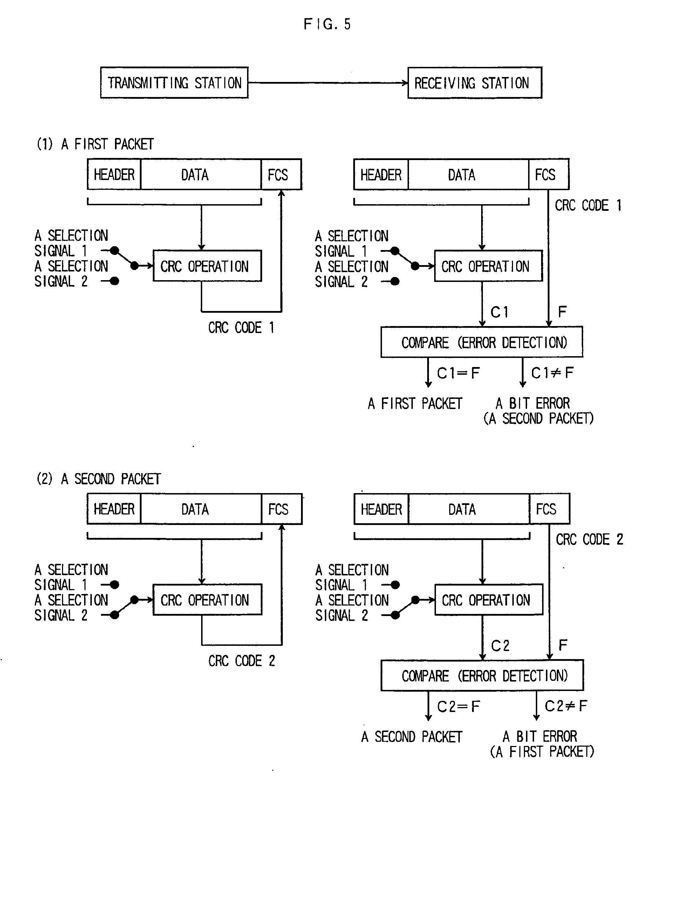

Fig. 5 shows a packet communication method according to a fifth embodiment of the invention. As shown in Fig. 5, when a transmitting station transmits a first packet, a CRC code generated by a CRC operation chosen by a selection signal 1 is put into the FCS field (see part (1)). When the transmitting station transmits a second packet, a CRC code 2 generated by a CRC operation chosen by a selection signal 2 is put into the FCS field (see part (2)). For example, the selection signals 1 and 2 specify a parameter of a generator polynomial or the like that is used for the CRC operation.

A receiving station performs error detection on a received packet. More specifically, a CRC code (C1) generated by the CRC operation chosen by the selection signal 1 is compared with a CRC code (F) contained in the FCS field of the received packet. If the codes C1 and F coincide with each other, the received packet is recognized as a first packet and subjected to reception processing. On the other hand, if the codes C1 and F do not coincide with each other, a CRC code (C2) generated by the CRC operation chosen by the selection signal 2 is compared with the CRC code (F) contained in the FCS field of the received packet. If the codes C2 and F coincide with each other, the received packet is recognized as a second packet and subjected to the reception processing. An alternative procedure is possible in which the error detection using codes C2 and F is performed first to judge whether a received packet is a second packet and then error detection using codes C1 and F is performed to judge whether the received packet is a first packet.

If the codes C1 and F do not coincide with each other and the codes C2 and F do not coincide with each other, the received packet is discarded with the understanding that it includes a bit error. In this manner, both of the first packet and the second packet can be recognized through the error detection.

### (Embodiment 6)

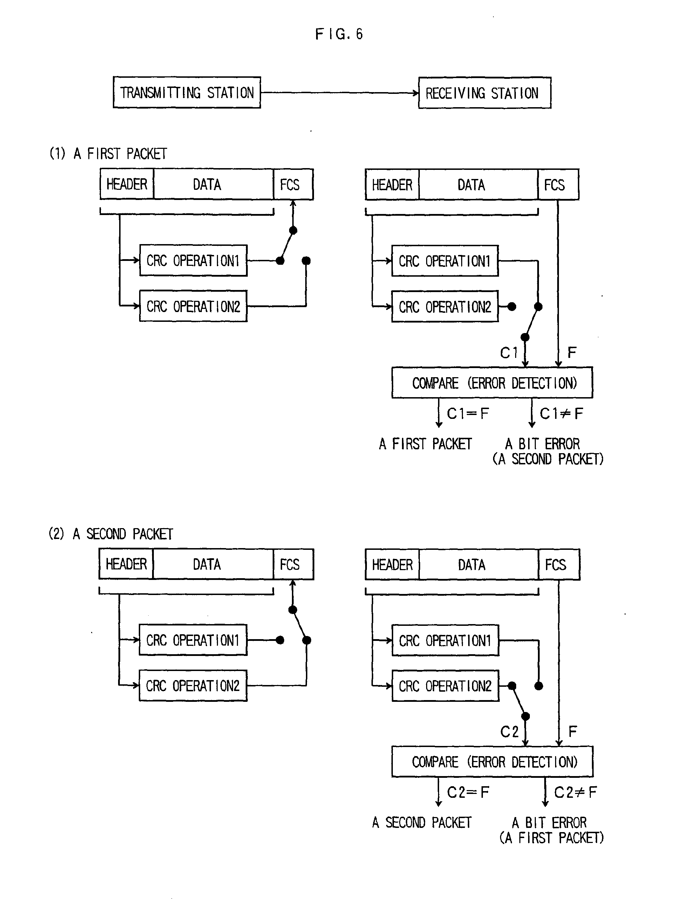

Fig. 6 shows a packet communication method according to a sixth embodiment of the invention. As shown in Fig. 6, when a transmitting station transmits a first packet, a CRC code 1 generated by a first CRC operation is put into the FCS field (see part (1)). When the transmitting station transmits a second packet, a CRC code 2 generated by a second CRC operation is put into the FCS field (see part (2)). For example, the first and second CRC operations are different from each other in a parameter of a generator polynomial or the like that is used for the CRC operations.

A receiving station performs error detection on a received packet. More specifically, a CRC code (C1) generated by the first CRC operation is compared with a CRC code (F) contained in the FCS field of the received packet. If the codes C1 and F coincide with each other, the received packet is recognized as a first packet and subjected to reception processing. On the other hand, if the codes C1 and F do not coincide with each other, a CRC code (C2) generated by the second CRC operation is compared with the CRC code (F) contained in the FCS field of the received packet. If the codes C2 and F coincide with each other, the received packet is recognized as a second packet and subjected to the reception processing. An alternative procedure is possible in which the error detection using codes C2 and F is performed first to judge whether a received packet is a second packet and then error detection using codes C1 and F is performed to judge whether the received packet is a first packet.

If the codes C1 and F do not coincide with each other and the codes C2 and F do not coincide with each other, the received packet is discarded with the understanding that it includes a bit error. In this manner, both of the first packet and the second packet can be recognized through the error detection.

### (Embodiment 7)

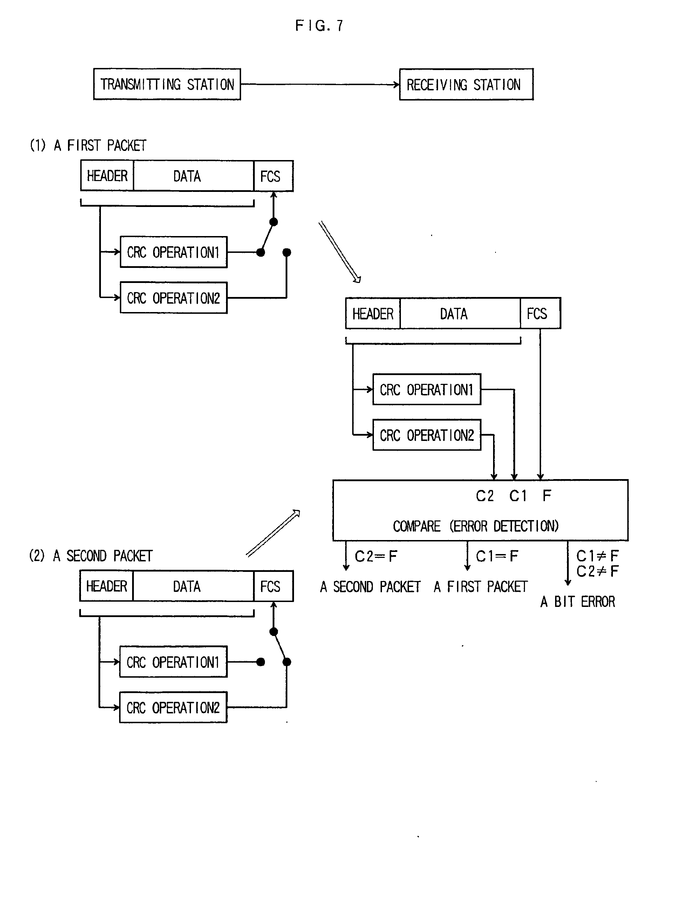

Fig. 7 shows a packet communication method according to a seventh embodiment of the invention. As shown in Fig. 7, when a transmitting station transmits a first packet, a CRC code generated by a first CRC operation is put into the FCS field (see part (1)). When the transmitting station transmits a second packet, a CRC code generated by a second CRC operation is put into the FCS field (see part (2)).

A receiving station performs error detection on a received packet. More specifically, a CRC code (C1) generated by the first CRC operation and a CRC code (C2) generated by the second CRC operation are compared with a CRC code (F) contained in the FCS field of the received packet. If the codes C1 and F coincide with each other, the received packet is recognized as a first packet and subjected to reception processing. If the codes C2 and F coincide with each other, the received packet is recognized as a second packet and subjected to the reception processing.

If the codes C1 and F do not coincide with each other and the codes C2 and F do not coincide with each other, the received packet is discarded with the understanding that it includes a bit error. In this manner, both of the first packet and the second packet can be recognized through the error detection.

The above-described first to seventh embodiments are directed to the case of discriminating between the two kinds of packets. However, two or more kinds of operations to be performed on a CRC code or two or more prescribed values to be added to or subtracted from a CRC code may be prepared, in which case a total of three or more kinds of packets can be generated as a packet having a CRC code and packets having results of operations performed on a CRC code and subjected to the discrimination processing. Three or more kinds of parameters of the CRC operation may be prepared, in which case three or more kinds of packets having respective CRC codes can be generated and subjected to the discrimination processing. Further, certain kinds of operations to be performed on a CRC code and certain kinds of parameters of the CRC operation may be combined, in which case three or more kinds of packets can be generated and subjected to the discrimination processing.

### (Example 1)

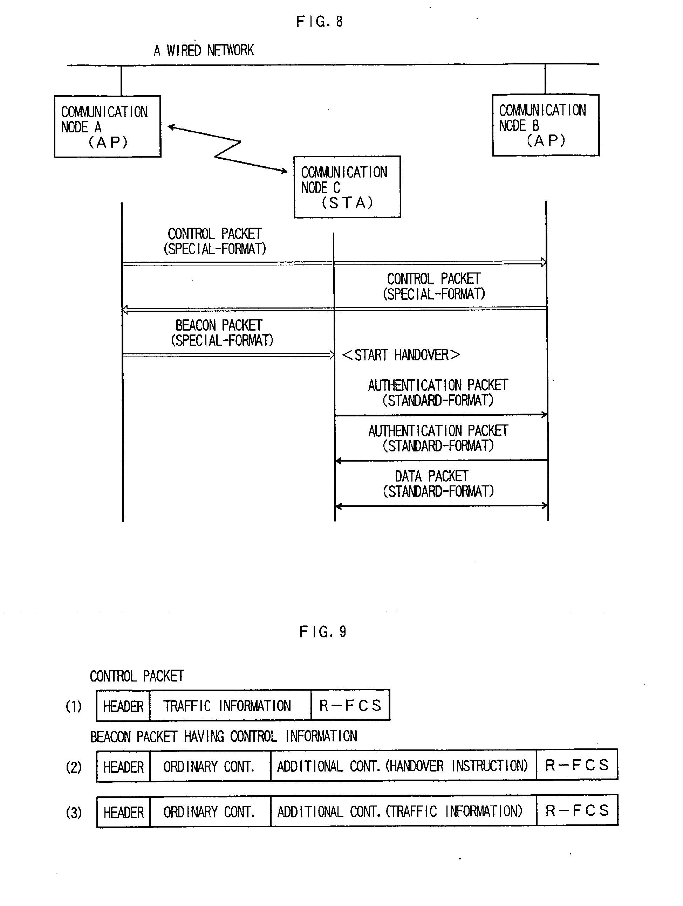

Fig. 8 shows Example 1 of the invention. Fig. 9 shows frame structures of a control packet and beacon packets having control information that are transmitted between communication nodes.

In Fig. 8, communication nodes A and B are access points that are connected to each other via a wired network. The communication nodes A and B measure traffic within their own cells and exchange resulting traffic information using control packets. A communication node C is a mobile terminal that is connected to the communication node A or B via a radio channel. This example assumes handover from the communication node A to the communication node B.

As shown in Fig. 9(1), a control packet that is used for exchange of control information between the communication nodes A and B is such that traffic information of each cell is contained in a data section and a CRC code obtained by performing a prescribed operation on an ordinary CRC code is contained in an FCS field. Each of the following Examples will be described as employing an R (reverse)-FCS that is obtained by performing bit-reversal on an ordinary CRC code, the bit reversal being an example of a typical operation. Therefore, each of the communication nodes A and B recognizes that a received packet is a special-format control packet by using an R-FCS in the same manner as described in any of the first to seventh embodiments, and acquires traffic information of the other cell from the data section. Each of the communication nodes A and B compares the traffic information of the other cell with traffic information of its own cell. A communication node that has detected a difference that is larger than a threshold value (in this example, communication node A) transmits a beacon packet having control information to an accommodating mobile terminal (in this example, communication node C).

As shown in Fig. 9(2), this beacon packet having control information is a special-format beacon packet containing an R-FCS and also contains control information including a handover instruction in an additional control information section that is provided separately from an ordinary control information section. The control information section as an ordinary section of a beacon packet may be omitted. When receiving the beacon packet having control information, the communication node C recognizes, using the R-FCS, that it is a special-format packet, acquires the handover instruction from the additional control information section, and starts handover. The communication node C exchanges standard-format authentication packets with the other communication node. If judging that a communication with the communication node B is possible, the communication node C starts transmission and reception of data packets with the communication node B as an access point.

In this example, traffic information is exchanged between the access points and handover involving the mobile terminal is effected forcibly by an instruction from the access point. An alternative method is possible in which exchanged pieces of traffic information themselves of the respective access points are communicated to the mobile terminal being contained in beacon packets having control information and the mobile terminal judges whether to effect handover. Fig. 9(3) shows a frame structure of a beacon packet having control information that is used in this method.

### (Example 2)

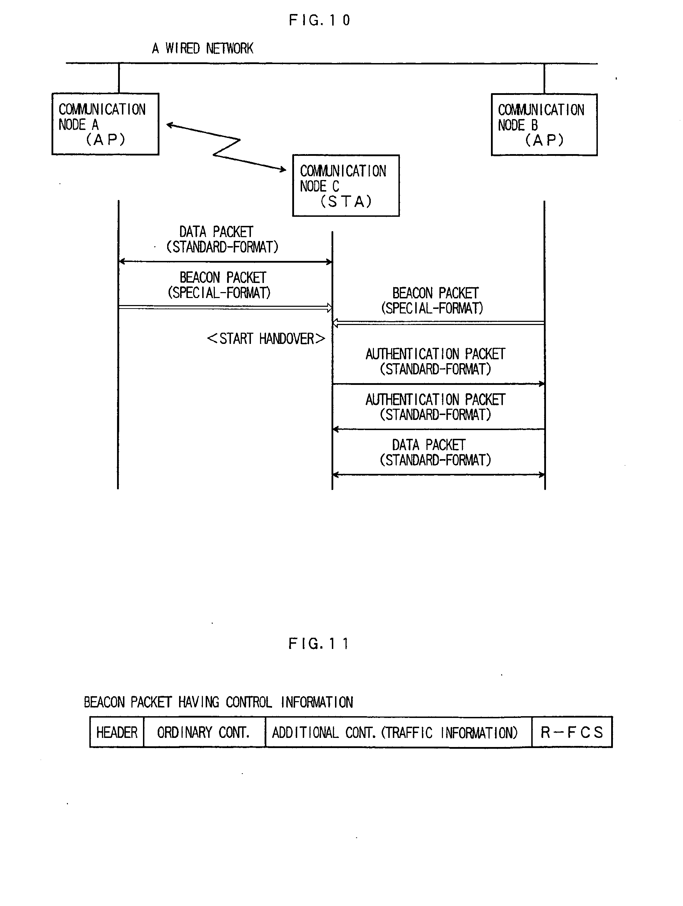

Fig. 10 shows Example 2 of the invention. Fig. 11 shows a frame structure of a beacon packet having control information that is transmitted between communication nodes.

In Fig. 10, communication nodes A and B are access points that are connected to each other via a wired network or connected to different wired networks. The communication nodes A and B measure traffic within their own cells. A communication node C is a mobile terminal that is connected to the communication node A or B via a radio channel. This example assumes handover from the communication node A to the communication node B.

Each of the communication nodes A and B communicates measured traffic information to the communication node C by putting it in a beacon packet having control information. As shown in Fig. 11, this beacon packet having control information is such that traffic information of each cell is contained in an additional control information section and an R-FCS is set. The communication node C recognizes that a received packet is a special-format beacon packet having control information using the R-FCS in the same manner as described in any of the first to seventh embodiments, and acquires traffic information of each cell from the additional control information section.

If the traffic of the communication node A with which the communication node C is communicating exceeds a threshold value and the traffic of the communication node B does not exceed a threshold value, the communication node C starts handover from the communication node A to the communication node B. The communication node C exchanges standard-format authentication packets with the communication node B. If judging that a communication with the communication node B is possible, the communication node C starts transmission and reception of data packets with the communication node B as an access point.

### (Example 3)

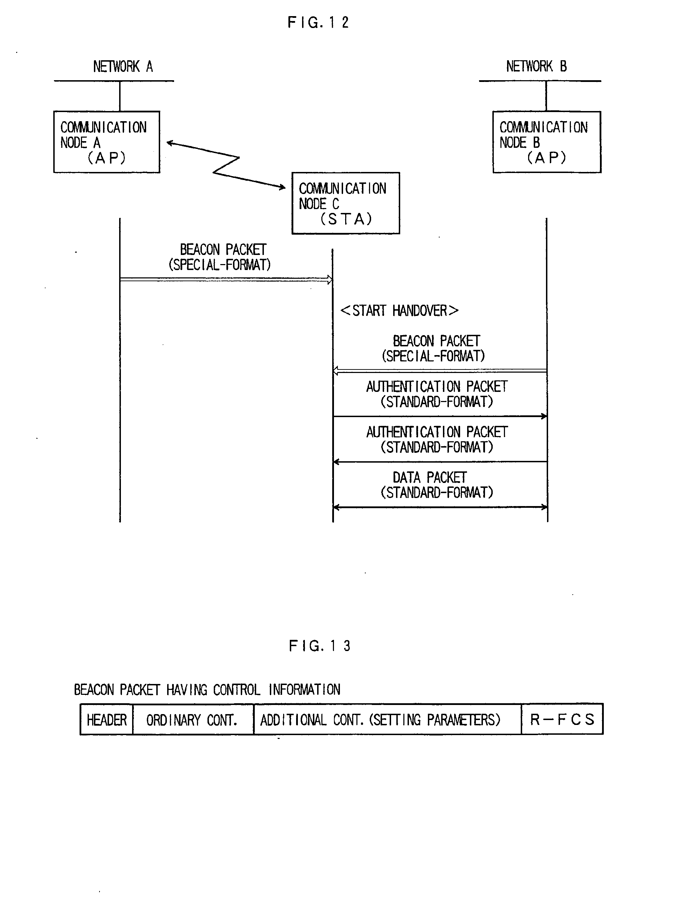

Fig. 12 shows Example 3 of the invention. Fig. 13 shows a frame structure of a beacon packet having control information that is transmitted between communication nodes.

In Fig. 12, communication nodes A and B are access points that are connected to different wired networks. A communication node C is a mobile terminal that is connected to the communication node A or B via a radio channel. This example assumes handover from the communication node A to the communication node B.

Each of the communication nodes A and B communicates wireless network setting parameters that are necessary for connection to itself and network setting parameters that are necessary for connection to the wired network to the communication node C by putting those parameters in a beacon packet having control information. As shown in Fig. 12, this beacon packet having control information is such that wireless network setting parameters and network setting parameters are contained in an additional control information section and an R-FCS is set. The communication node C that has communicated with the communication node A detects a movement, a variation in the propagation environment, or the like and decides to make handover to the communication node B. At this time, the communication node C receives a beacon packet having control information that is transmitted from the communication node B, and recognizes that it is a special-format beacon packet having control information using the R-FCS. The communication node C acquires wireless network setting parameters (ESS-ID, Wep key, etc.) and network setting parameters (IP address, subnet mask, proxy, default printer, etc.) from the additional control information section, and updates the information in the communication node C itself. The communication node C exchanges standard-format authentication packets with the communication node B. If judging that a communication with the communication node B is possible, the communication node C starts transmission and reception of data packets with the communication node B as an access point.

### (Example 4)

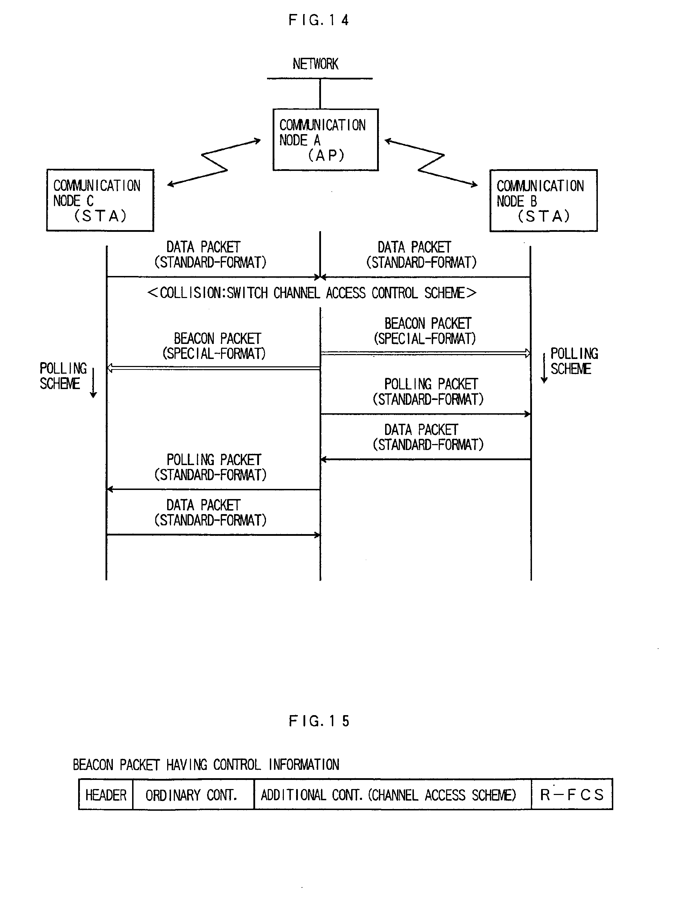

Fig. 14 shows Example 4 of the invention. Fig. 15 shows a frame structure of a beacon packet having control information that is transmitted between communication nodes.

In Fig. 14, a communication node A is an access point that is connected to a wired network. Communication nodes B and C are mobile terminals that are connected to the communication node A via radio channels. This example assumes switching from an ordinary channel access control scheme (distributed channel access scheme) based on CSMA/CA to a concentrated channel access control scheme (polling scheme) based on polling, the switching being performed in accordance with the traffic congestion status.

When detecting that collisions are occurring frequently because of heavy traffic or measured traffic in its own cell is greater than a threshold value, the communication node A transmits beacon packets having control information to the communication nodes B and C. As shown in Fig. 15, these beacon packets having control information are such that control information indicating a transition to the polling scheme is contained in an additional control information section and an R-FCS is set. Each of the communication nodes B and C recognizes that the received packet is a special-format beacon packet having control information using the R-FCS in the same manner as described in any of the first to seventh embodiments, acquires the information indicating a transition to the polling scheme from the additional control information section, and updates the channel access control scheme of the communication node B or C itself. Then, the communication node A transmits polling packets to the communication nodes B and C in order. In response, the communication nodes B and C transmit data packets.

### (Example 5)

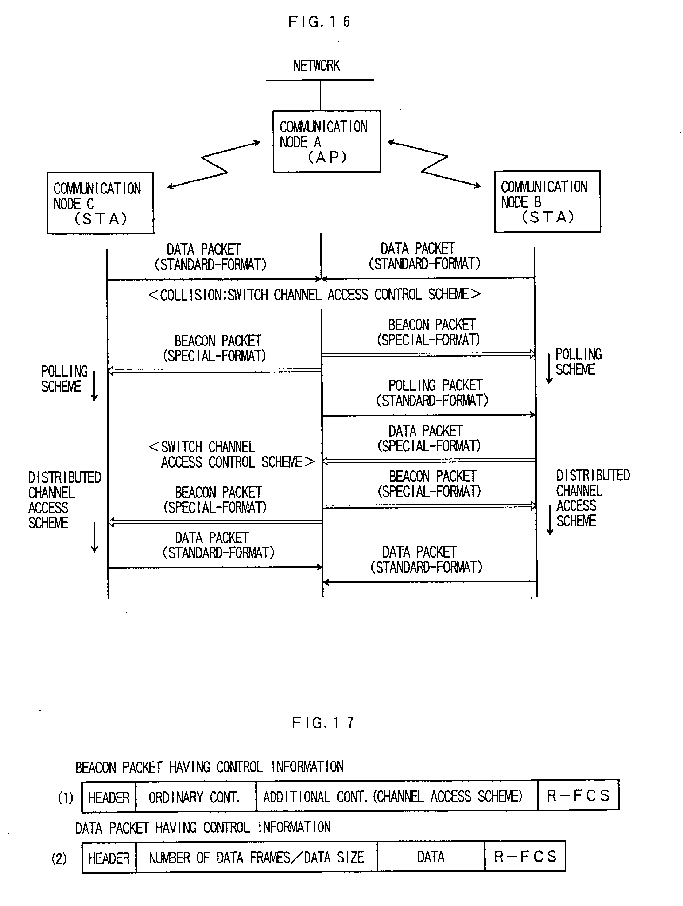

Fig. 16 shows Example 5 of the invention. Fig. 17 shows frame structures of a beacon packet having control information and a data packet having control information that are transmitted between communication nodes.

As shown in Fig. 16, the connection relationships between the communication nodes A, B, and C and the procedure to the switching from the distributed channel access scheme based on CSMA/CA to the polling scheme are the same as in Example 4.

When receiving a polling packet, the communication node B transmits a data packet having control information in which the number of data frames or the size of data that are subjects of buffering by the communication node B itself is added as control information. As shown in Fig. 17(2), this data packet having control information is such that the number of data frames or the size of data that are subjects of buffering by the communication node B itself is contained in a data section and an R-FCS is set. The communication node A recognizes that the received packet is a special-format data packet having control information using the R-FCS in the same manner as described in any of the first to seventh embodiments, and acquires, from the data section, the number of data frames or the size of data that are subjects of buffering by the communication node B itself. If the number of data frames or the data size is smaller than a threshold value, the communication node A transmits, to the communication nodes B and C, beacon packets having control information for causing a transition from the current polling scheme to the distributed channel access scheme.

As shown in Fig. 1 7(1), these beacon packets having control information are such that control information indicating a transition to the distributed channel access scheme is contained in an additional control information section and an R-FCS is set. Each of the communication nodes B and C recognizes that the received packet is a special-format beacon packet having control information using the R-FCS in the same manner as described in any of the first to seventh embodiments, acquires the information indicating a transition to the distributed channel access scheme from the additional control information section, and updates the channel access control scheme of the communication node B or C itself.

### (Example 6)

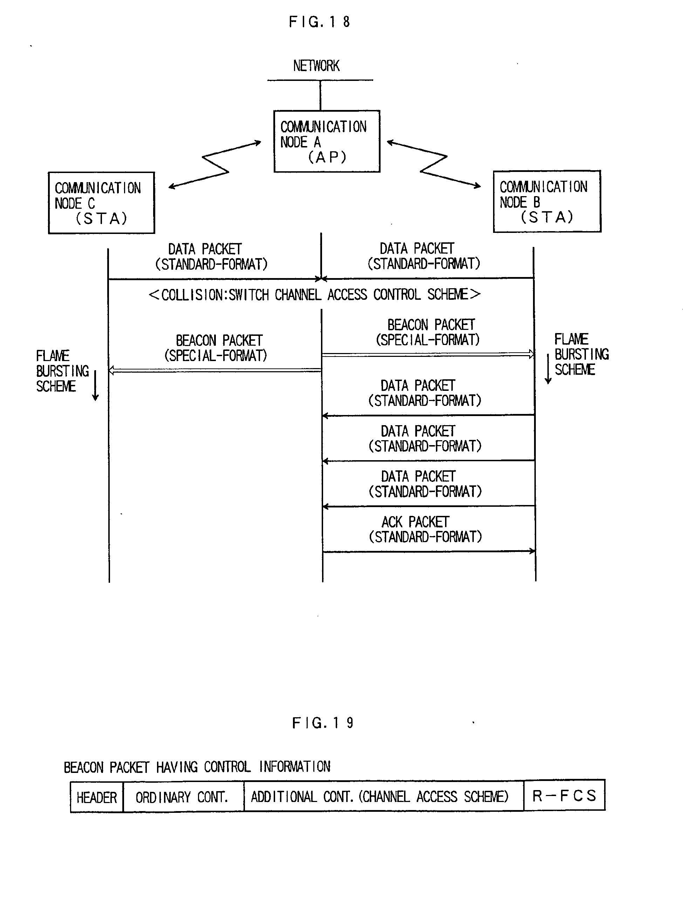

Fig. 18 shows Example 6 of the invention. Fig. 19 shows a frame structure of a beacon packet having control information that is transmitted between communication nodes.

In Fig. 18, a communication node A is an access point that is connected to a wired network. Communication nodes B and C are mobile terminals that are connected to the communication node A via radio channels. This example assumes switching from an ordinary channel access control scheme (basic frame exchange scheme) based on CSMA/CA to a channel access control scheme (frame bursting scheme) in which a communication node that has acquired a transmission right transmits data packets continuously, the switching being performed in accordance with the traffic congestion status.

When detecting that collisions are occurring frequently because of heavy traffic or measured traffic in its own cell is greater than a threshold value, the communication node A transmits beacon packets having control information to the communication nodes B and C. As shown in Fig. 19, these beacon packets having control information are such that control information indicating a transition to the frame bursting scheme is contained in an additional control information section and an R-FCS is set. Each of the communication nodes B and C recognizes that the received packet is a special-format beacon packet having control information using the R-FCS in the same manner as described in any of the first to seventh embodiments, acquires the information indicating a transition to the frame bursting scheme from the additional control information section, and updates the channel access control scheme of the communication node B or C itself. Then, a communication node that has acquired a transmission right (in this example, communication node B) transmits data packets continuously.

Examples 4-6 are directed to the channel access control scheme switching between the basic frame exchange scheme and the polling scheme or the frame bursting scheme. Examples of such channel access control schemes or address control schemes that can be set by a beacon packet having control information are a distributed channel access control scheme and a special channel access control scheme, a DATA-ACK exchange scheme and an RTS-CTS-DATA-ACK exchange scheme, and an ordinary transmission scheme and a prioritized channel access control scheme (a back-off value is changed). Instead of the beacon packet, a control packet or data packet that is intended for communications with all of the other nodes, such as a broadcast packet, may be used.

### (Example 7)

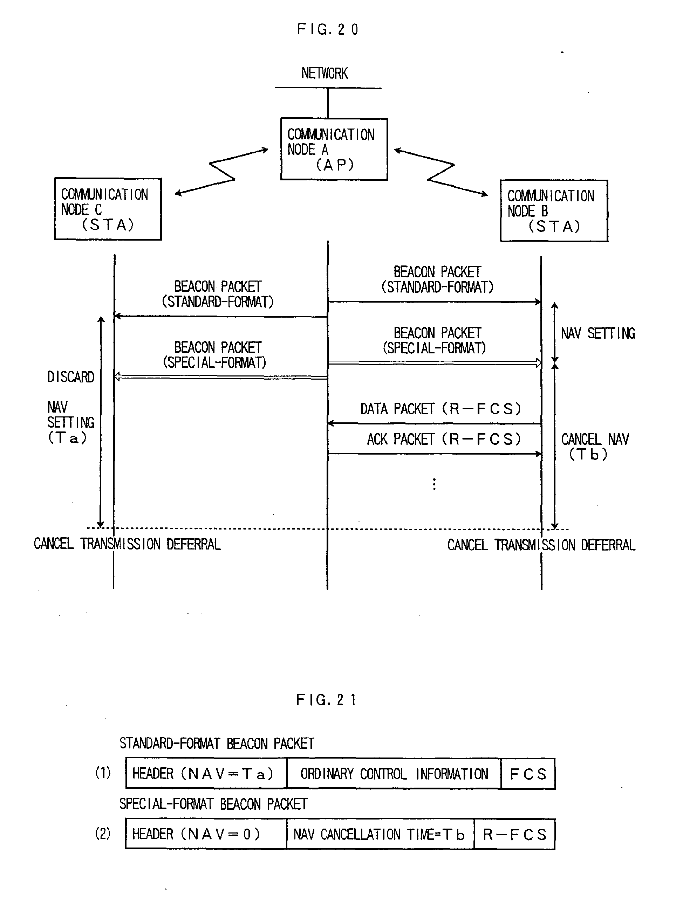

Fig. 20 shows Example 7 of the invention. Fig. 21 shows frame structures of standard-format and special-format beacon packets that are transmitted between communication nodes.

In Fig. 20, a communication node A is an access point that is connected to a wired network. Communication nodes B and C are mobile terminals that are connected to the communication node A via radio channels. This example assumes a case that priority is given to acquisition of a transmission right by the communication node B capable of receiving a special-format beacon packet. The communication node C cannot receive a special-format beacon packet.

The communication node A transmits standard-format beacon packets having an ordinary FCS to the communication nodes B and C and sets corresponding network allocation vectors (NAVs). As shown in Fig. 21 (1), these standard-format beacon packets have NAV information (Ta) as a header. Then, the communication node A transmits special-format beacon packets having an ordinary FCS code to the communication nodes B and C. As shown in Fig. 21(2), these special-format beacon packets are such that NAV information as a header is "0," an NAV cancellation time Tb is contained in a control information section, and an R-FCS is set. The time Tb is a remaining part of the NAV set time Ta at a time point of reception of the special-format beacon packet.

The communication node B recognizes that the received packet is a special-format beacon packet using the R-FCS in the same manner as described in any of the first to seventh embodiments, acquires the NAV cancellation time Tb from the control information section, and cancels the NAV setting of the communication node B itself. During the period (Tb) when the NAV setting is canceled, the communication nodes A and B transmit and receive data packets and ACK packets having an R-FCS. On the other hand, being unable to recognize the special-format beacon packet having the R-FCS, the communication node C discards it as an erroneous packet. Therefore, the transmission deferral of the communication node C due to the NAV setting is continued.

### (Example 8)

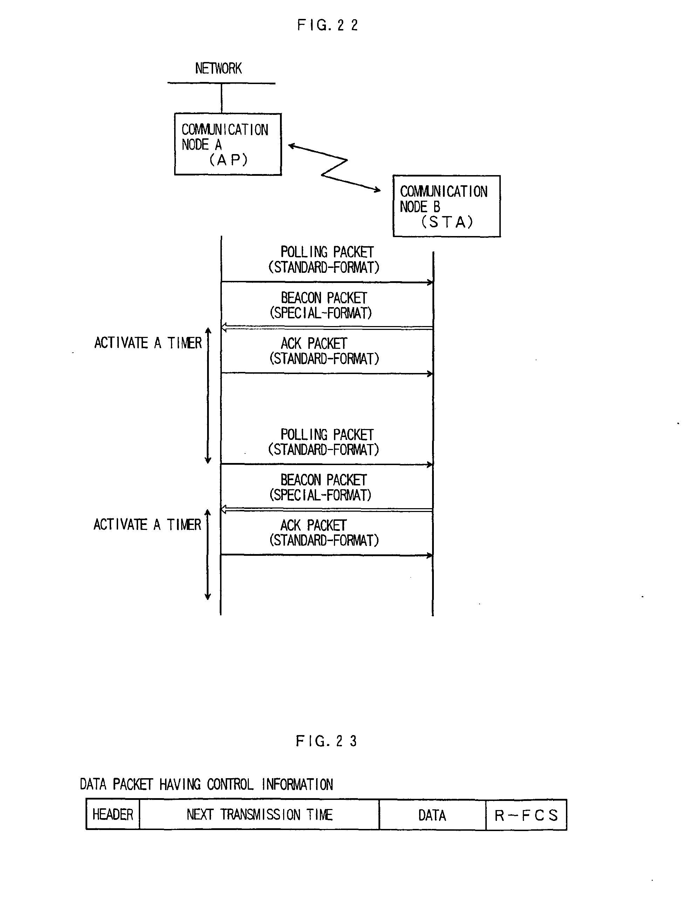

Fig. 22 shows Example 8 of the invention. Fig. 23 shows a frame structure of a data packet having control information that is transmitted between communication nodes.

In Fig. 22, a communication node A is an access point that is connected to a wired network. A communication node B is a mobile terminal that is connected to the communication node A via a radio channel. This example assumes a polling scheme in which the communication node B transmits a data packet in response to a polling packet from the communication node A, and is characterized in that the communication node B communicates a required starting time for the next transmission to the communication node A.

In response to a polling packet from the communication node A, the communication node B calculates a required starting time for the next transmission on the basis of past records of time intervals between consecutive transmissions and notices from upper layers and transmits a data packet having control information that contains the required starting time for the next transmission to the communication node A. As shown in Fig. 23, this data packet having control information is such that the required starting time for the next transmission is contained as control information in a data section and an R-FCS is set. The communication node A recognizes that the received packet is a special format-data packet having control information using the R-FCS in the same manner as described in any of the first to seventh embodiments, acquires the required starting time for the next transmission of the communication node B from the data section, updates a next transmission time corresponding to the communication node B on a polling list, and activates a timer. When the required starting time for the next transmission is reached, the communication node A transmits a polling packet to the communication node B. The above operation will be repeated thereafter.

### (Example 9)

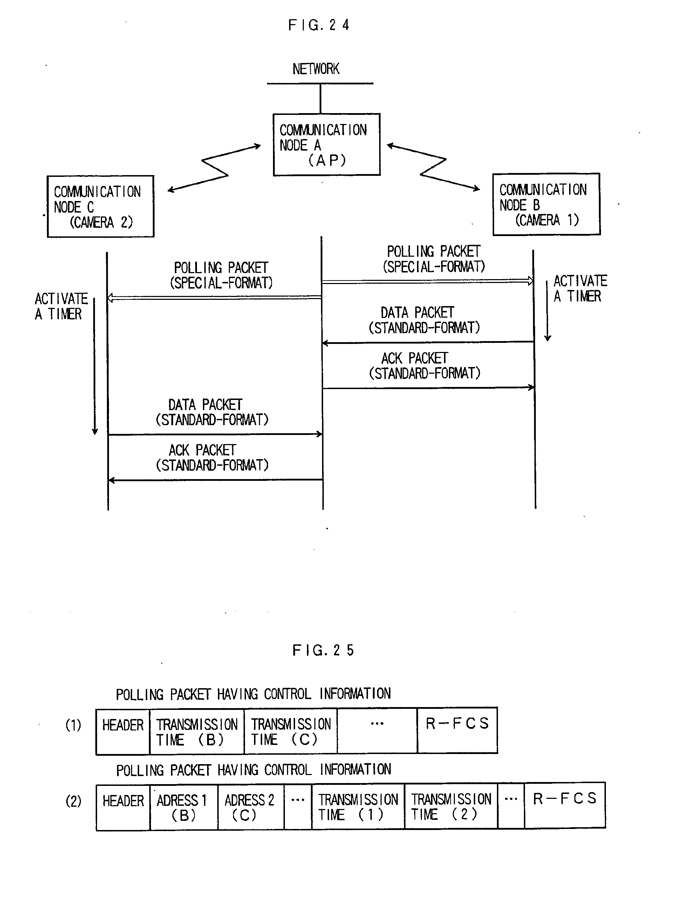

Fig. 24 shows Example 9 of the invention. Fig. 25 shows a frame structure of a polling packet having control information that is transmitted between communication nodes.

In Fig. 24, a communication node A is an access point that is connected to a wired network. Communication nodes B and C are a stationary terminal (e.g., a camera that transmits image information) that is connected to the communication node A via radio channels. This example assumes a polling scheme in which the communication nodes B and C transmit a data packet in response to a polling packet from the communication node A.

The communication node A calculates transmission times for the communication nodes B and C according to a prescribed schedule, and transmits (multicasts) a polling packet having control information that contains the transmission times to the communication nodes B and C. As shown in Figs. 25(1) and 25(2), this polling packet having control information is such that the transmission times for the respective communication nodes are contained as control information in a data section and an R-FCS is set. The frame format shown in Fig. 25(2) is one suitable for a case that the polling order is changed every time. Each of the communication nodes B and C recognizes that the received packet is a special-format polling packet having control information using the R-FCS in the same manner as described in any of the first to seventh embodiments, acquires the transmission time for the communication node B or C itself from the data section, and transmits a data packet at the specified time by activating a timer.

### (Example 10)

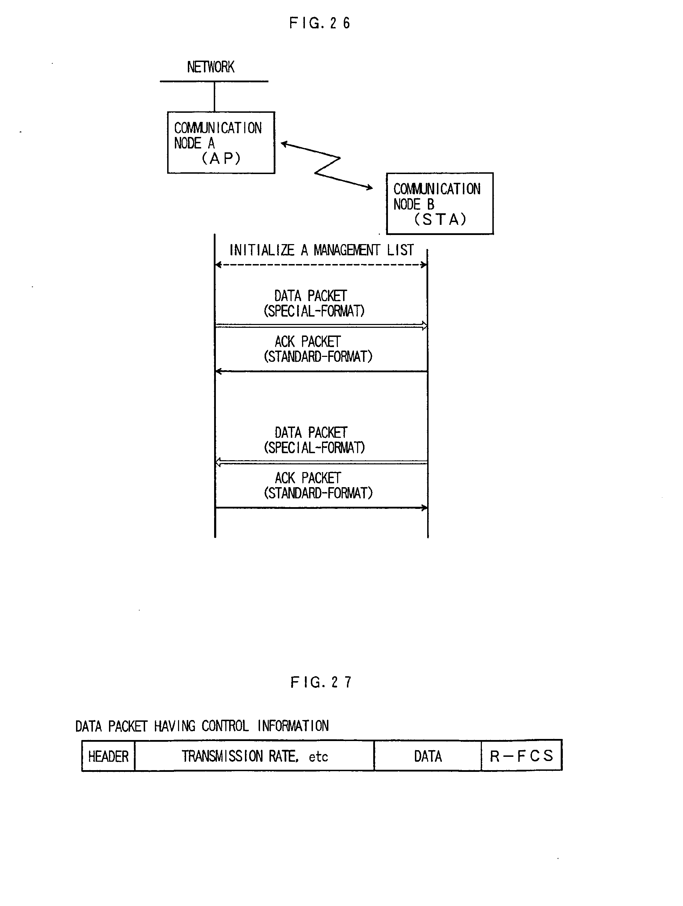

Fig. 26 shows Example 10 of the invention. Fig. 27 shows a frame structure of a data packet having control information that is transmitted between communication nodes.

In Fig. 26, a communication node A is an access point that is connected to a wired network. A communication node B is a mobile terminal that is connected to the communication node A via a radio channel. This example is characterized in that a communication node measures a reception power and a transmission rate of a transmission from the counter communication node and informs the counter communication node of a transmission power to be used in the next transmission and a recommendable transmission rate.

Each of the communication nodes A and B measures a reception power and a transmission rate in an authentication process or the like and initializes a management list. The communication node A calculates a reception power and a transmission rate using the last packet received from the communication node B, and transmits a data packet having control information that contains a transmission power and a recommendable transmission rate for the communication node B. At this time, the data packet having control information is transmitted by using the transmission power, transmission rate, etc. for the communication node B in the management list.

As shown in Fig. 27, this data packet having control information is such that the transmission power and the recommendable transmission rate are contained as control information in a data section and an R-FCS is set. The communication node B recognizes that the received packet is a special-format data packet having control information using the R-FCS in the same manner as described in any of the first to seventh embodiments, and acquires the transmission power and the recommendable transmission rate from the data section. And the communication node B updates the values of the transmission power, transmission rate, etc. for the communication node A in the management list. An ACK packet in response to the data packet having control information is transmitted in the standard format.

The communication node B calculates a reception power and a transmission rate using the received data packet having control information, and transmits, as the next data packet transmission, a data packet having control information that contains a transmission power and a recommendable transmission rate for the communication node A. At this time, the data packet having control information is transmitted by using the transmission power, transmission rate, etc. for the communication node A in the management list. The communication node A recognizes that the received packet is a special-format data packet having control information using the R-FCS, and acquires the transmission power and the recommendable transmission rate from the data section. And the communication node A updates the values of the transmission power, transmission rate, etc. for the communication node B in the management list. The above operation will be repeated thereafter.

### (Example 11)

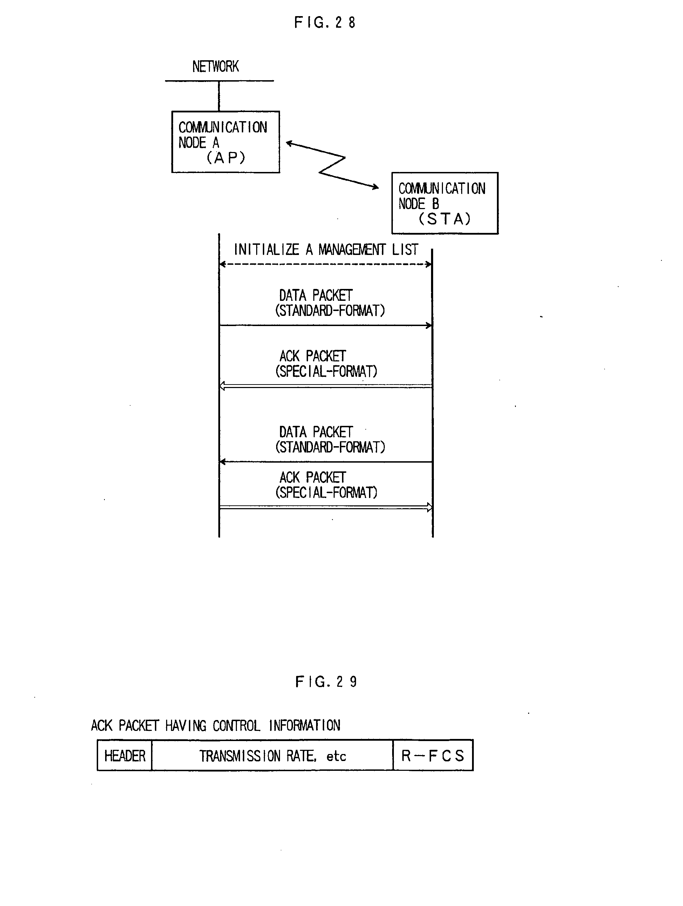

Fig. 28 shows Example 11 of the invention. Fig. 29 shows a frame structure of an ACK packet having control information that is transmitted between communication nodes.

Whereas Example 10 is such that a transmission power and a recommendable transmission rate for the other communication node are transmitted being contained in a data packet, this example is characterized in that such information is contained in an ACK packet.

Each of the communication nodes A and B measures a reception power and a transmission rate in an authentication process or the like and initializes a management list. The communication node A transmits a data packet using the transmission power, transmission rate, etc. for the communication node B in the management list. Receiving the data packet, the communication node B calculates a reception power and a transmission rate using the received data packet and transmits an ACK packet having control information that contains a transmission power and a recommendable transmission rate for the communication node A.

As shown in Fig. 29, this ACK packet having control information is provided with a control information section that is not provided in an ordinary ACK packet. The transmission power and the recommendable transmission rate are contained as control information in the control information section and an R-FCS is set. The communication node A recognizes that the received packet is a special-format ACK packet having control information using the R-FCS in the same manner as described in any of the first to seventh embodiments, and acquires the transmission power and the recommendable transmission rate from the control information section. And the communication node A updates the values of the transmission power, transmission rate, etc. for the communication node B in the management list. The same procedure is followed when the communication node B transmits a data packet.

### (Example 1 2)

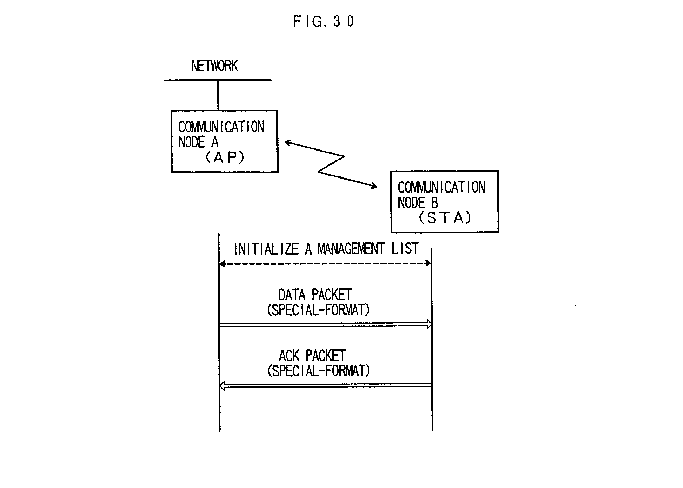

Fig. 30 shows Example 12 of the invention.

In Fig. 30, a communication node A is an access point that is connected to a wired network. A communication node B is a mobile terminal that is connected to the communication node A via a radio channel. Processing that is a combination of the processing of Example 10 and that of Example 11 is performed in this example.

Each of the communication nodes A and B measures a reception power and a transmission rate in an authentication process or the like and initializes a management list. The communication node A calculates a reception power and a transmission rate using the last packet received from the communication node B, and transmits a data packet having control information that contains a transmission power and a recommendable transmission rate for the communication node B. At this time, the data packet having control information is transmitted by using the transmission power, transmission rate, etc. for the communication node B in the management list.

As shown in Fig. 27, this data packet having control information is such that the transmission power and the recommendable transmission rate are contained as control information in a data section and an R-FCS is set. The communication node B recognizes that the received packet is a special-format data packet having control information using the R-FCS in the same manner as described in any of the first to seventh embodiments, and acquires the transmission power and the recommendable transmission rate from the data section. And the communication node B updates the values of the transmission power, transmission rate, etc. for the communication node A in the management list.

Receiving the data packet, the communication node B calculates a reception power and a transmission rate using the received data packet having control information and transmits an ACK packet having control information that contains a transmission power and a recommendable transmission rate for the communication node A.

As shown in Fig. 29, this ACK packet having control information is provided with a data section that is not provided in an ordinary ACK packet. The transmission power and the recommendable transmission rate are contained as control information in the data section and an R-FCS is set. The communication node A recognizes that the received packet is a special-format ACK packet having control information using the R-FCS in the same manner as described in any of the first to seventh embodiments, and acquires the transmission power and the recommendable transmission rate from the data section. And the communication node A updates the values of the transmission power, transmission rate, etc. for the communication node B in the management list. The above operation will be repeated thereafter.

### (Example 13)

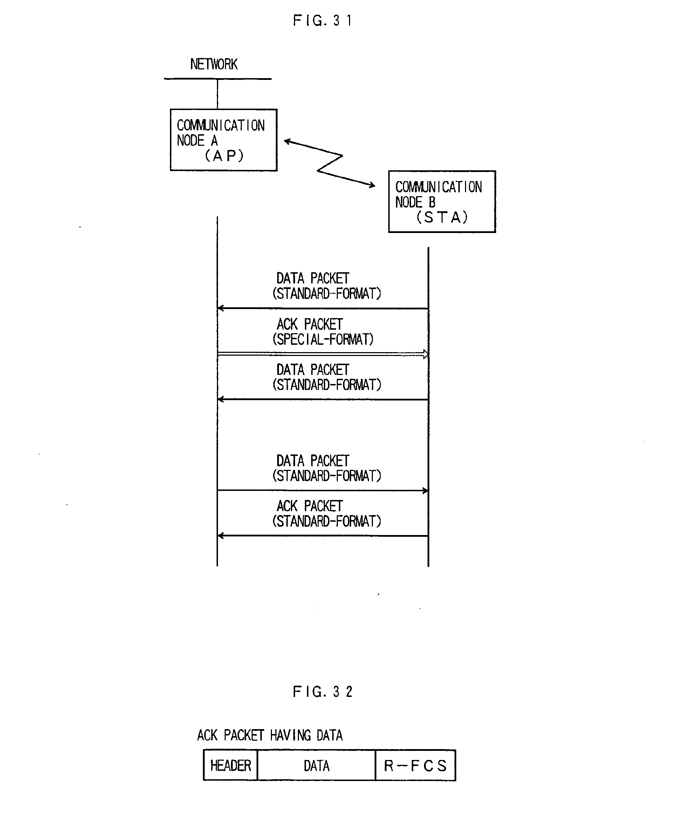

Fig. 31 shows Example 13 of the invention. Fig. 32 shows a frame structure of an ACK packet having data that is transmitted between communication nodes.

In Fig. 31, a communication node A is an access point that is connected to a wired network. A communication node B is a mobile terminal that is connected to the communication node A via a radio channel. This example is characterized in that data is added to an ACK packet.

The communication node B transmits a data packet to the communication node A. At the time of transmission of an ACK packet in response to the data packet, the communication node A judges whether or not there exists a data frame that is directed to the communication node B. If there exists a data frame that is directed to the communication node B, the communication node A transmits an ACK packet having data in which the data frame is contained in an ACK packet.

As shown in Fig. 32, this ACK packet having data is provided with a data section that is not provided in an ordinary ACK packet. The data frame contained in the data section and an R-FCS is set. The communication node B recognizes that the received packet is a special-format ACK packet having data using the R-FCS in the same manner as described in any of the first to seventh embodiments, and acquires, from the data section, the data frame that is directed to the communication node B. If there exists no data frame that is directed to the communication node B at the time of transmission of an ACK packet, a standard-format ACK packet is transmitted.

### (Example 14)

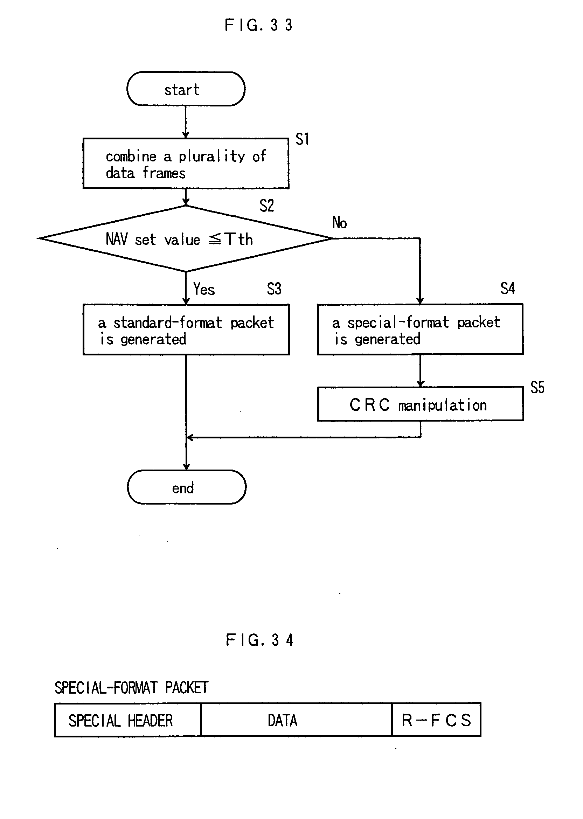

Fig. 33 illustrates Example 14 of the invention. Fig. 34 shows a frame structure of a special-format packet that is transmitted between communication nodes.

In current wireless LAN standards, it is assumed that a single data frame is transmitted by a single radio packet and the maximum size of a data section is restricted to 2,296 bytes. And, accordingly, the maximum setting time of NAV that can be expressed by a duration field in a MAC header is set at 32 msec. On the other hand, when a large packet that exceeds the above maximum size is transmitted at a low transmission rate, the transmission time exceeds the maximum setting time 32 msec of NAV that can be expressed by a MAC header. This embodiment is intended to accommodate such a situation.

As shown in Fig. 33, when a packet the maximum size of whose data section exceeds 2,296 bytes is generated by, for example, combining a plurality of data frames (S1), it is judged whether or not the NAV set value exceeds a maximum setting time Tth (S2). If the NAV set value is smaller than Tth, a standard-format packet is generated because an ordinary MAC header is sufficient (S3). On the other hand, if the NAV set value exceeds Tth, a special-format packet is generated because an ordinary MAC header is insufficient (S4). Then, an R-FCS is set by a CRC manipulation (S5). As shown in Fig. 34, the special-format packet has a special header in which the number of bits of the duration field of the MAC header is increased.

With the above measure, a communication node that has received this special-format packet can handle this packet properly by recognizing that this packet is a special-format packet using the R-FCS in the same manner as described in any of the first to seventh embodiments and acquiring the extended NAV information from the duration field of the MAC header.

### (Example 15)

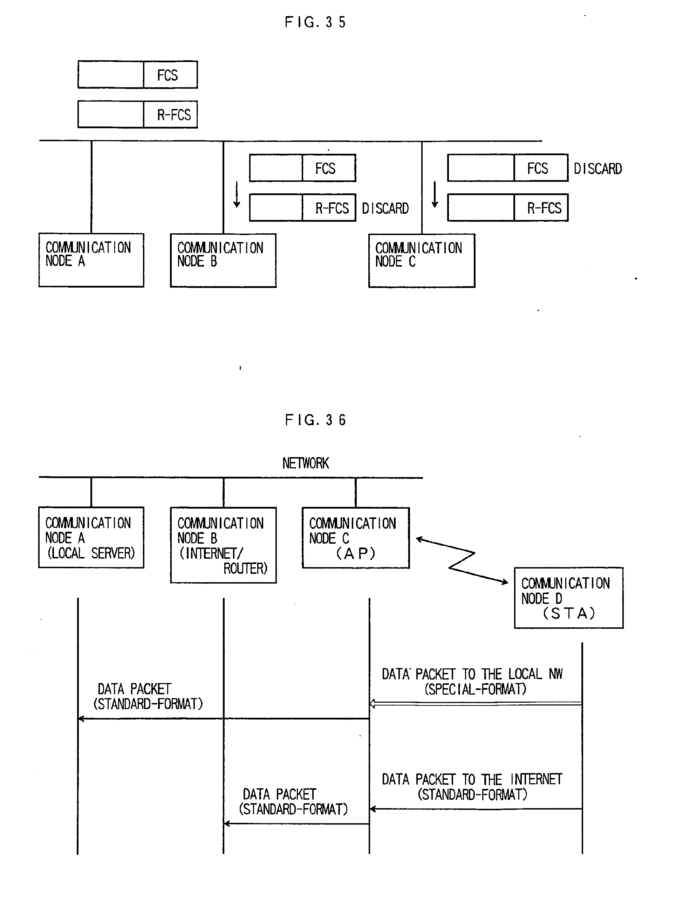

Fig. 35 shows Example 15 of the invention.

As shown in Fig. 35, communication nodes A, B, and C are connected to each other via the same wired network. Conventionally, when one of communication nodes connected to the same wired network transmits a broadcast packet, all of the other communication nodes connected to the network process the packet. However, among the communication nodes connected to the network a PDA or the like (in this example, communication node C) that is low in processing ability may refrain from processing the broadcast packet, whereby the load of its CPU can be reduced. Such a communication node C has a function of dealing with an R-FCS and discards, as erroneous packets, packets in which an ordinary FCS code is set.

Therefore, the communication node A, for example, uses an ordinary FCS code and an R-FCS for different purposes; that is, the communication node A sets an ordinary FCS code in a broadcast packet to be transmitted to ordinary communication nodes and transmits an R-FCS-set packet to communication nodes that are low in processing ability. With this measure, the communication node C can selectively receive only R-FCS-set packets while discarding broadcast packets. The load of its CPU can thus be reduced.

### (Example 16)

Fig. 36 shows Example 16 of the invention.

As shown in Fig. 36, communication nodes A, B, and C are connected to each other via the same wired network. The communication node A is a local server that is connected to a local network, the communication node B is a router that is connected to the Internet, and the communication node C is an access point. A communication node D is a mobile terminal that is connected to the communication node C via a radio channel.

In transmitting a data packet to the local network via the communication node C, the communication terminal D transmits a special-format data packet containing an R-FCS. When recognizing that the received packet is a data packet directed to the local network using the R-FCS in the same manner as described in any of the first to seventh embodiments, the communication node C transmits the received packet to the communication node A that is connected to the local network.

On the other hand, in transmitting a data packet to the Internet via the communication node C, the communication terminal D transmits a standard-format data packet containing an ordinary FCS code. When recognizing that the received packet is a data packet directed to the Internet using the ordinary FCS code, the communication node C transmits the received packet to the communication node B that is connected to the Internet.

### (Example 17)

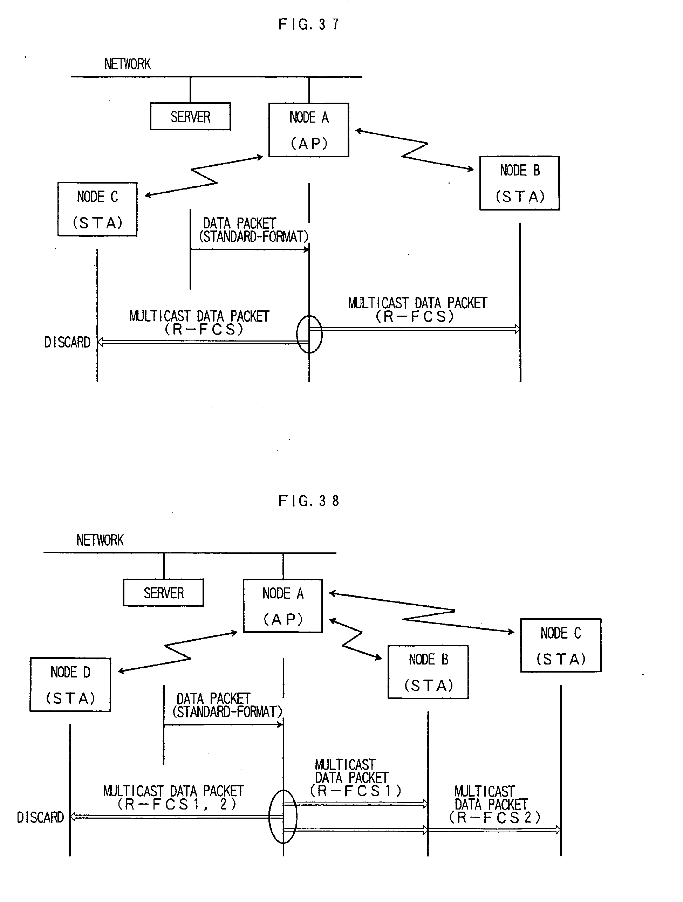

Fig. 37 shows Example 17 of the invention.

In Fig. 37, a communication node A is an access point that is connected to a server via a wired network. Communication nodes B and C are mobile terminals that are connected to the communication node A via radio channels. In this example, it is assumed that the communication node B can handle an R-FCS and the communication node C cannot deal with an R-FCS.

When recognizing, using its port number or the like, a data packet for special users that is transmitted from the server, the communication node A converts it to a special-format multicast data packet containing an R-FCS and transmits the latter. The communication node B can receive the multicast data packet normally by recognizing the R-FCS in the same manner as described in any of the first to seventh embodiments. On the other hand, the communication node C discards the R-FCS-set multicast data packet as an erroneous packet. It is assumed that all the communication nodes can receive multicast data packets normally in which an ordinary FCS code is set. With the above measure, communication nodes to which a multicast data packet should be transmitted can be selected easily.

### (Example 18)

Fig. 38 shows Example 18 of the invention.

In Fig. 38, a communication node A is an access point that is connected to a server via a wired network. Communication nodes B, C, and D are mobile terminals that are connected to the communication node A via radio channels. In this example, it is assumed that the communication node B can handle an R-FCS1 code and an R-FCS2 code, the communication node C can handle only the R-FCS2 code, and the communication node D can deal with neither the R-FCS1 code nor the R-FCS2 code. The R-FCS1 code and the R-FCS2 code are CRC codes that are compatible with plural kinds of CRC operations.

When recognizing, using its port number or the like, a data packet for special users that is transmitted from the server, the communication node A converts it to a special-format multicast data packet containing an R-FCS1 code or an R-FCS2 code and transmits the latter. The communication node B can receive the multicast data packet normally by recognizing the R-FCS1 code or the R-FCS2 code in the same manner as described in any of the first to seventh embodiments. The communication node C can receive only the corresponding multicast data packet normally by recognizing the R-FCS2 code in the same manner. On the other hand, the communication node D discards, as an erroneous packet, the multicast data packet in which the R-FCS1 code or the R-FCS2 code is set. It is assumed that all the communication nodes can receive multicast data packets normally in which an ordinary FCS code is set. With the above measure, communication nodes to which a multicast data packet should be transmitted can be selected easily while they are classified.

Whereas Examples 17 and 18 are directed to the function that only the communication nodes capable of handling an R-FCS can receive prescribed packets normally, a function of the same kind can be used for receiving authentication packets or performing a prescribed operation. The former case will be described in detail in the following examples. An example of utilization of the latter case is such that a communication node that has received a packet containing an R-FCS is caused to turn on an LED.

### (Example 19)

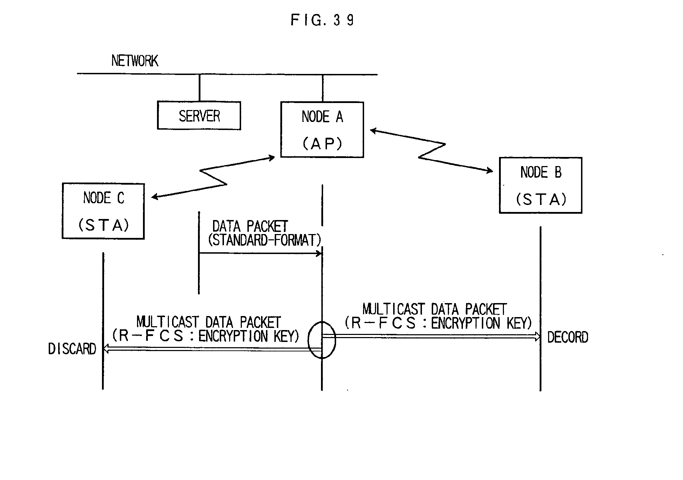

Fig. 39 shows Example 19 of the invention.

In Fig. 39, a communication node A is an access point that is connected to a server via a wired network. Communication nodes B and C are mobile terminals that are connected to the communication node A via radio channels. In this example, it is assumed that the communication node B can handle an R-FCS and the communication node C cannot deal with an R-FCS.

When recognizing, using its port number or the like, a data packet for special users that is transmitted from the server, the communication node A encrypts it using an encryption key that is different from an ordinary one. The communication node A converts the encrypted data packet to a multicast data packet containing an R-FCS and transmits the latter. The communication node B can extract a data frame by identifying the encryption key by recognizing the R-FCS in the same manner as described in any of the first to seventh embodiments and decoding the multicast data packet. On the other hand, the communication node C discards the R-FCS-set multicast data packet as an erroneous packet. Even if the communication node C attempts to decode the multicast data packet without discarding it, the attempt results in a failure because the communication node C cannot recognize the R-FCS and hence cannot identify the necessary encryption key. With the above measure, communication nodes to which a multicast data packet should be transmitted can be selected easily.

It is also possible to assign a plurality of encryption keys to respective R-FCSs and allow only a plurality of communication nodes to decode respective multicast data packets.

### (Example 20)

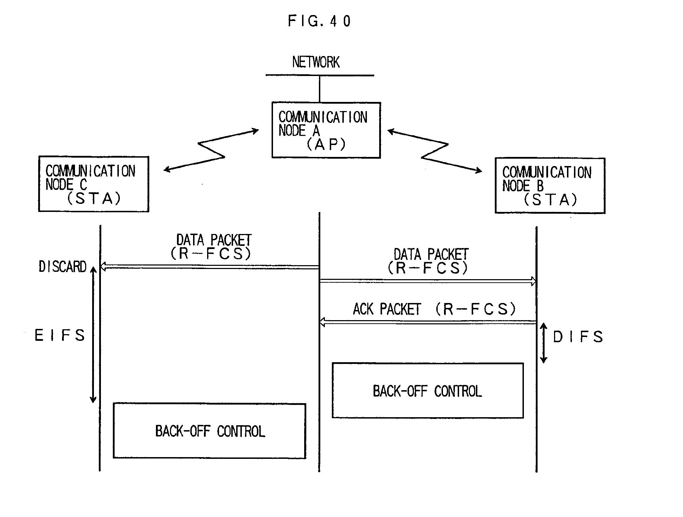

Fig. 40 shows Example 20 of the invention.

In Fig. 40, a communication node A is an access point that is connected to a wired network. Communication nodes B and C are mobile terminals that are connected to the communication node A via radio channels. In this example, it is assumed that the communication node B can handle an R-FCS and the communication node C cannot deal with an R-FCS.

The communication terminal A transmits special-format data packets containing an R-FCS. The communication node B receives the data packet by recognizing the R-FCS in the same manner as described in any of the first to seventh embodiments, and transmits an ACK packet that likewise contains an R-FCS. On the other hand, the communication node C discards the R-FCS-set data packet as an erroneous packet.

After a lapse of a time DIFS from the transmission of the ACK packet, the communication node B starts a back-off control. On the other hand, the communication node C starts a back-off control after a lapse of a time EIFS from the discard of the data packet. The time EIFS is equal to a time SIFS plus an ACK frame time length in the case of a lowest-rate transmission plus the time DIFS, and satisfies
EIFS > DIFS.
The standby time of the communication node C is longer and, as a result, priority is given to acquisition of a transmission right by the communication node B.

### (Example 21)

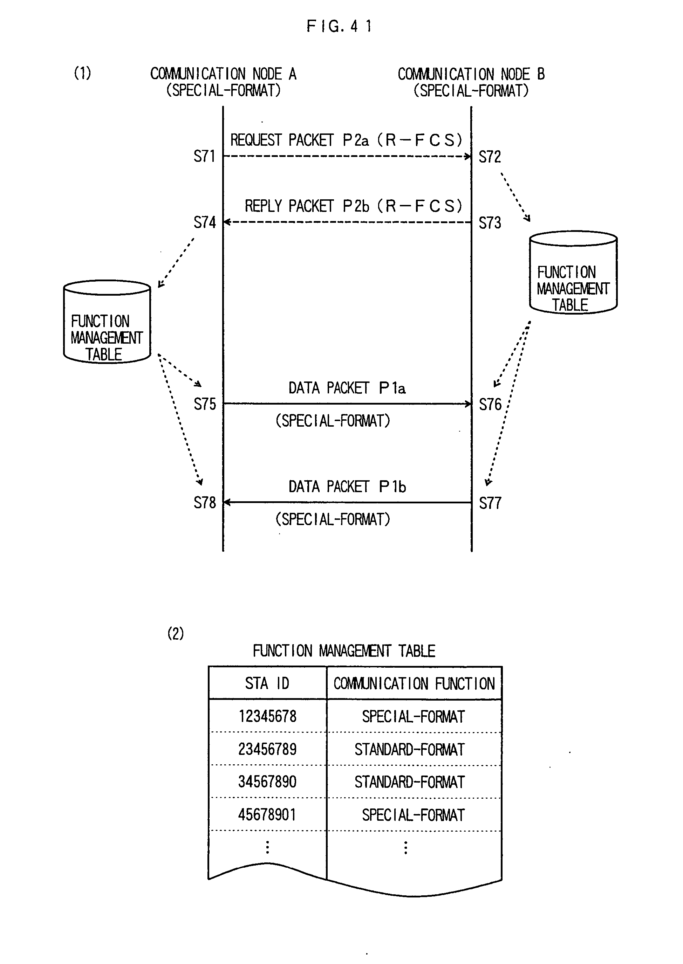

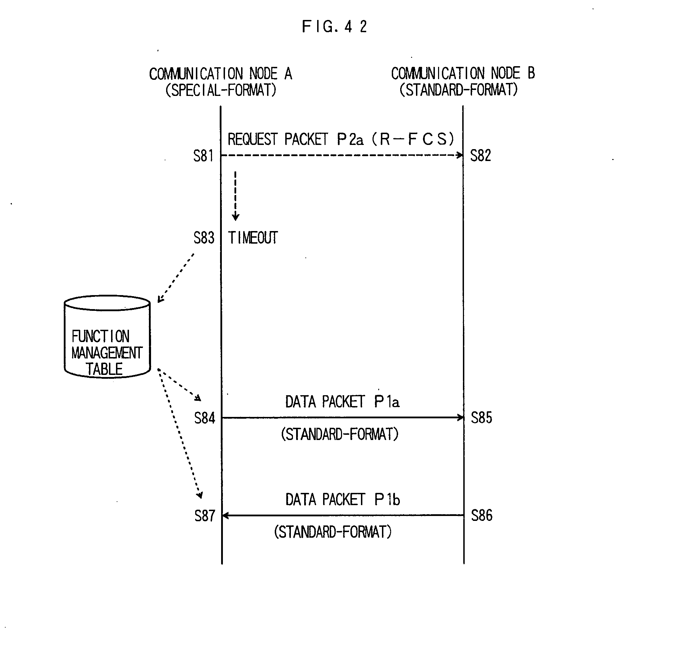

Figs. 41 and 42 show Example 21 of the invention. In this example, it is assumed that stations A and B are compatible with a special format using an R-FCS and a station C is not compatible with the special format using an R-FCS. It is assumed that special-format packets containing an R-FCS are used as authentication packets (request packet and reply packet) when stations mutually check whether or not they are compatible with the special format. It is also assumed that data packets contain an ordinary FCS code.

Fig. 41 shows processes that are executed by the stations A and B that are compatible with the special format, that is, a communication function check process that is executed by the stations A and B to mutually check whether or not they are compatible with the special format and a data packet transmission/reception process. Fig. 42 shows processes that are executed by the station A that is compatible with the special format and the station C that is not compatible with the special format, that is, a communication function check process that is executed by the stations A and C to mutually check whether or not they are compatible with the special format and a data packet transmission/reception process.

As shown in Fig. 41, first, the station A that is compatible with the special format transmits a request packet P2a to the station B (S71). An R-FCS is set in the request packet P2a in the same manner as described in any of the first to seventh embodiments, and hence the request packet can be received normally by only stations that are compatible with the special format.

The station B identifies the request packet P2a because it is compatible with the special format, and recognizes that the source station A is compatible with the special format (S72). Then, the station B registers, in its own function management table, information indicating whether or not the station A is compatible with the special format. As shown in Fig. 41(2), pieces of information indicating whether or not respective stations are compatible with the special format are recorded in the function management table so as to be correlated with IDs (identification codes) of the respective stations.

In response to the received request packet P2a, the station B transmits a prescribed reply packet P2b to the source station (S73). An R-FCS is also set in the reply packet P2b. The station A identifies the reply packet P2b that is transmitted from the station B in response to the request packet P2a, and recognizes that the station B is compatible with the special format (S74). The station A registers, in its own function management table, information indicating whether or not the station B is compatible with the special format.

In transmitting a data packet P1 a, the station A refers to the contents of its own function management table and thereby checks whether or not the destination station is compatible with the special format (S75). In the example of Fig. 41, since the destination station B is compatible with the special format, the station A generates a data packet P1a according to the special format and transmits it to the station B (S75). The data packet P1 a contains an ordinary FCS code.

Receiving the data packet P1 a, the station B checks whether or not the source station A is compatible with the special format by referring to its own function management table (S76). In the example of Fig. 41, since the station A is compatible with the special format, the station B processes the received data packet P1 a according to the definition (defined in advance) of the special format (S76).

Similarly, in transmitting a data packet P1 b, the station B refers to the contents of its own function management table and thereby checks whether or not the destination station is compatible with the special format (S77). In the example of Fig. 41, since the destination station A is compatible with the special format, the station B generates a data packet P1b according to the special format and transmits it to the station A (S77). The data packet P1b contains an ordinary FCS code. Receiving the data packet P1b, the station A checks whether or not the source station B is compatible with the special format by referring to its own function management table (S78). In the example of Fig. 41, since the station B is compatible with the special format, the station A processes the received data packet P1b according to the definition of the special format (S78).

Referring to Fig. 42, first, the station A that is compatible with the special format transmits a request packet P2a to the station C (S81). An R-FCS is set in the request packet in the same manner as described in any of the first to seventh embodiments, and hence the request packet P2a can be received normally by only stations that are compatible with the special format. Since the station C is not compatible with the special format, the received packet P2a is judged an erroneous packet (S82). Therefore, the request packet is discarded and causes no influences on the subsequent operation of the station C.

A timeout occurs in the station A because no reply packet to the request packet P2a comes in a predetermined time (S83). As a result, the station A recognizes that the station C is not compatible with the special format. This information is registered in the function management table of the station A itself.

In transmitting a data packet P1a, the station A refers to the contents of its own function management table and thereby checks whether or not the destination station is compatible with the special format (S84). In the example of Fig. 42, since the destination station C is not compatible with the special format, the station A generates a data packet P1a according to the standard format and transmits it to the station C (S84). The data packet P1a contains an ordinary FCS code.

Receiving the data packet P1 a, the station C processes it according to the definition of the standard format (S85). In transmitting a data packet P1 b, the station C generates a data packet P1 b according to the standard format and transmits it to the station A (S86). The data packet P1 b contains an ordinary CRC code. Receiving the data packet P1 b, the station A checks whether or not the source station C is compatible with the special format by referring to its own function management table (S87). In the example of Fig. 42, since the station C is not compatible with the special format, the station A processes the received data packet P1b according to the definition of the standard format (S87).

As described above, in this example, the stations A and B mutually check whether or not they are compatible with the special format using R-FCSs of a request packet P2a and a reply packet P2b. Based on that information, each of the stations A and B performs reception processing on a standard-format data packet containing an ordinary FCS or a special-format data packet.

### (Communication function check process of station A that corresponds to Example 21)

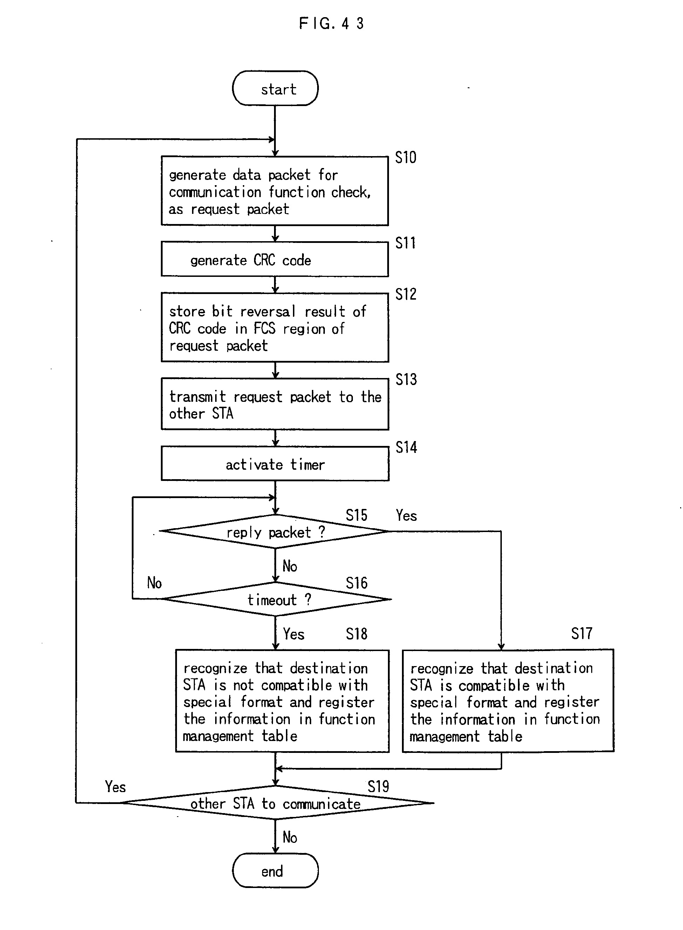

Fig. 43 shows a communication function check process of the station A that corresponds to Example 21. As shown in the figure, the station A generates, as a request packet, a data packet for a communication function check (S10). Then, the station A generates a CRC code for error detection for the request packet (S11), and reverses the all bits of the CRC code and stores a resulting code in the FCS field of the request packet (S12). Instead of reversing the all bits, processing of reversing only a prescribed part of the bits of the CRC code or adding or subtracting a prescribed value may be performed.

Then, the station A transmits the request packet to the other station B (S 13), and activates an internal timer to check an elapsed time from the transmission of the request packet (S14). It is monitored whether a reply packet to the transmitted request packet is received before a timeout of the internal timer (S15 and S16). If a reply packet is received before a timeout, the station A recognizes that the destination station B is compatible with the special format, and registers information to that effect in its own function management table in such a manner that the information is correlated with a destination station ID (S17). On the other hand, if a timeout occurs before reception of a reply packet, the station A recognizes that the destination station B is not compatible with the special format and registers information to that effect in its own function management table in such a manner that the information is correlated with the destination station ID (S18).

If there remains a station(s) to communicate with, the station A returns from step S 19 to step S10 to perform the above operation again. With the above operation, information as shown in Fig. 41 (2) is registered in the function management table of each station. As a result, each station can recognize, from the contents of the function management table, whether or not the other station is compatible with the special format.

### (Data packet transmission process 1 of station A that corresponds to Example 21)

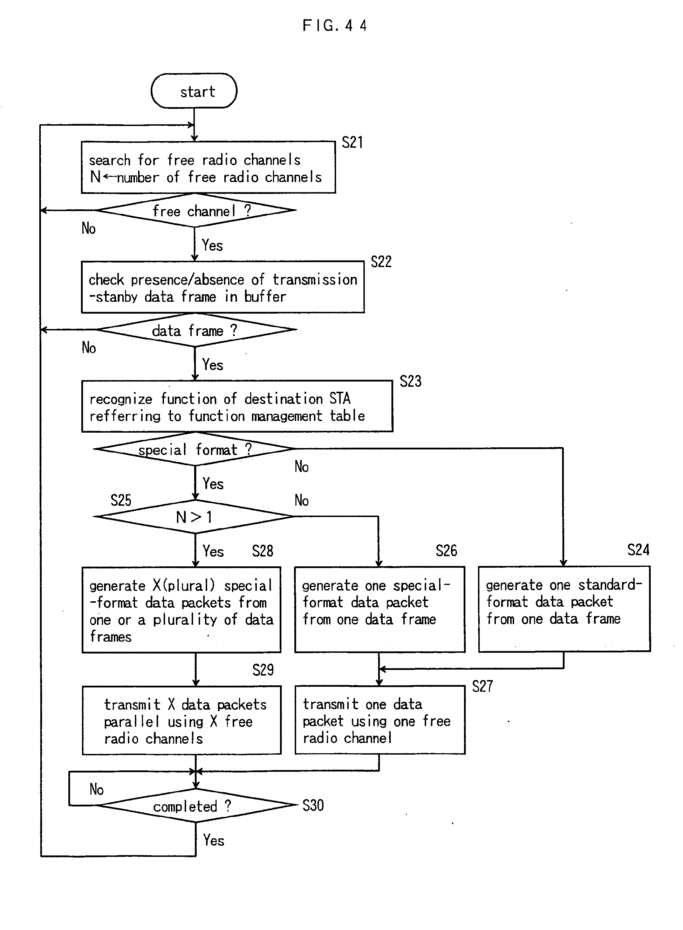

Fig. 44 shows a data packet transmission process 1 of the station A that corresponds to Example 21. As shown in the figure, the station A to perform transmission processing searches all available radio channels for all free radio channels (S21). In practice, the station A detects whether each radio channel is free by carrier sensing. The number of detected free radio channels is represented by N. If at least one free radio channel is detected, the station A moves to the next step S22. The station A acquires information indicating presence/absence of a data frame that is in a transmission-standby state in a transmission buffer (S22). The station A moves to step S23 if a transmission-standby data frame exist.

Then, the station A recognizes, by referring to the contents of its own function management table, whether or not the destination station is capable of a special-format communication (S23). For a transmission to the station C that is not compatible with the special format, the station A generates one standard-format data packet from one data frame as in the case of a transmission to a general station (S24). On the other hand, for a transmission to the station B that is compatible with the special format, the station A generates a special-format data packet in accordance with the number N of free radio channels. If the number N of free radio channels is one, the station A generates one data packet from one data frame as in the case of a transmission to a general station but employs the special format as the data packet format unlike in the conventional case (S25 and S26). If the number N of free radio channels is two or more, the station A generates X (plural) special-format data packets using one or a plurality of data frames (S25 and S28).

If one data packet has been generated at step S24 or S26, the station A transmits the one data packet using one free radio channel (S27). On the other hand, if the number N of free radio channels is two or more and X (plural) data packets have been generated at step S28, the station A transmits the X data packets parallel (i.e., simultaneously) using X free radio channels (S29). Then, the station A waits until completion of the transmission of the data packet(s) that was started at step S27 or S29 (S30). The station A thereafter returns to step S21.

### (Data packet transmission process 2 of station A that corresponds to Example 21)

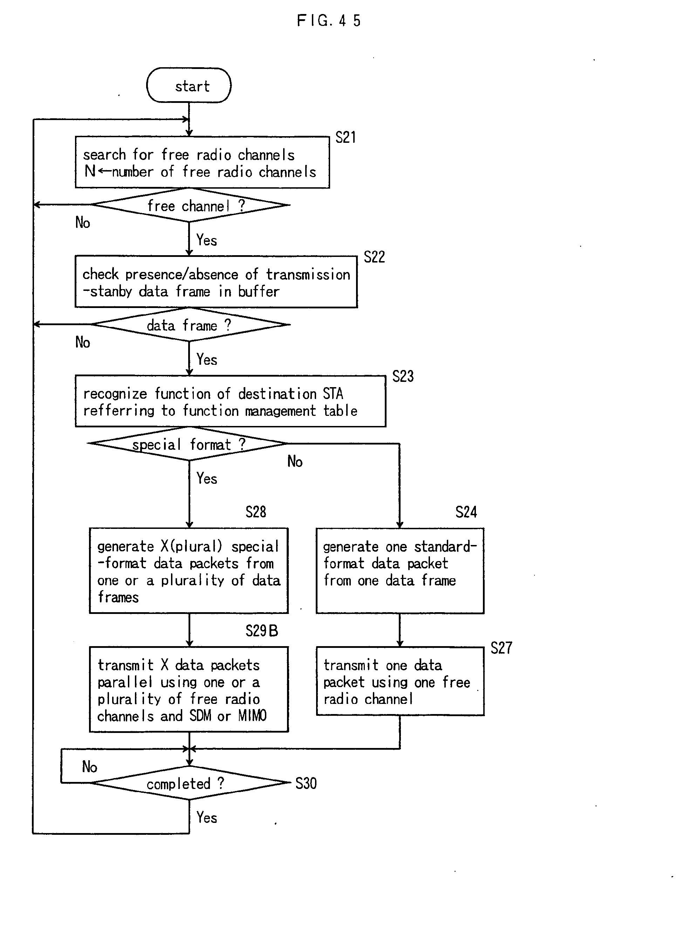

Fig. 45 shows a data packet transmission process 2 of the station A that corresponds to Example 21. This process corresponds to the case of also using SDM or MIMO. The number X of data packets to be transmitted parallel is determined within the range of X ≤ N·L where N is the number of free radio channels and L is the SDM or MIMO number.

Since SDM or MIMO enables simultaneous transmission of a plurality of data packets using a single radio channel, steps corresponding to the steps S25 and S26 in Fig. 44 are omitted. Therefore, if the destination station is compatible with the special format, the station A moves from step S23 to S28 and generates X data packets there. Then, the station A transmits the X data packets by using both of one or a plurality of free radio channels and SDM or MIMO (S29B). The other steps are the same as shown in Fig. 44.

Although this transmission process 2 assumes that SDM or MIMO is also used in the case where a plurality of radio channels can be used simultaneously, a plurality of data packets can be transmitted parallel (i.e., simultaneously) by using SDM or MIMO even in the case where only one radio channel is usable.

### (Data packet reception process of station B that corresponds to Example 21)

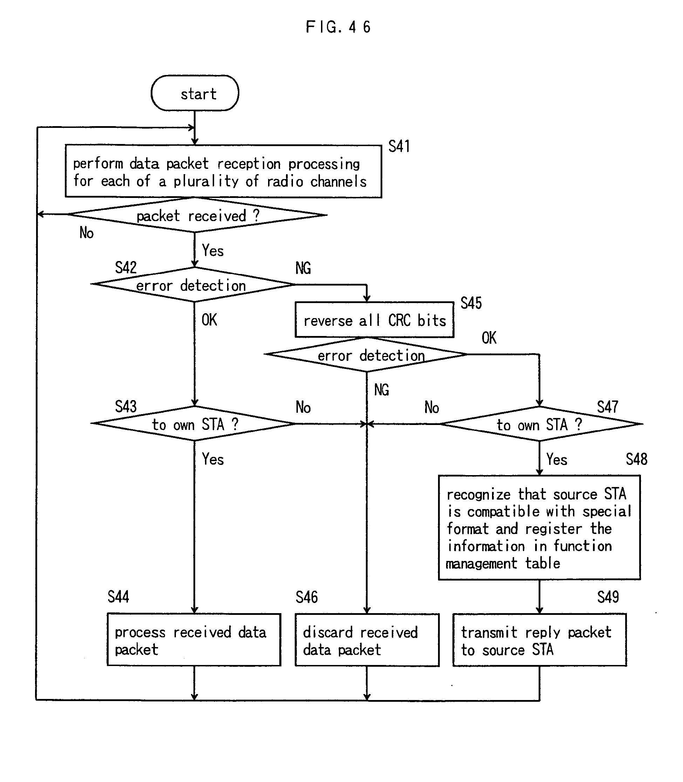

Fig. 46 shows a data packet reception process of the station B that corresponds to Example 21. In this example, the procedure of the first embodiment shown in Fig. 1 is employed as a procedure of sequentially recognizing a data packet for a communication function check (request packet) and a data packet for communication and performing reception processing thereon.

As shown in the figure, the station B to perform reception processing performs data packet reception processing repeatedly for each of a plurality of radio channels (S41). If a data packet is received, the station B performs error detection on the received data packet (S42). That is, the station B checks whether or not a result of the prescribed CRC operation performed on the data packet coincides with a CRC code contained in the FCS field.

The result of the CRC operation should coincide with the CRC code if the received data packet is of the standard format or the special format. However, non-coincidence is found if the data packet has a bit error or the like. Non-coincidence is always found in the case where a request packet is transmitted, because the transmitting side bit-reverses the CRC code at step S12 in Fig. 43.

Therefore, if CRC code coincidence is detected, the station B checks whether or not the destination of the received data packet coincides with its own ID (S43). If the received data packet is directed to the station B, the station B processes the received data packet (S44). If the received data packet is not directed to the station B, the station B discards it (S46).

If CRC code non-coincidence is detected, the station B subjects the CRC code to the inverse of the operation that was performed by the transmitting side at step S12 in Fig. 43. In this example, the station B reconstructs an original CRC code by reversing all the bits of the CRC code and checks whether or not the result coincides with a result of the CRC operation performed on the data packet (S45). If the received data packet has a bit error, non-coincidence is detected even if the CRC code is bit-reversed and hence the station B discards the received data packet (S46). On the other hand, if a request packet is received, a bit reversal result should coincide with a CRC operation result and hence the station B checks whether or not the destination of the received request packet coincides with its own ID (S47). If the received request packet is directed to the station B, the station B recognizes that the source station A is compatible with the special format and registers information to that effect in its own function management table in such a manner that the information is correlated with a source station ID (S48). Then, the station B transmits a prescribed reply packet to the source station A (S49). On the other hand, if the received request packet is not directed to the station B, the station B discards it (S46).

When a station that performs a conventional operation that is not compatible with the special format has received a request packet, no problems occur because it simply discards the packet as an erroneous packet. That is, there occur no problems even in a system including special-format-compatible stations and special-format-incompatible stations in mixed form.

### (Example 22)

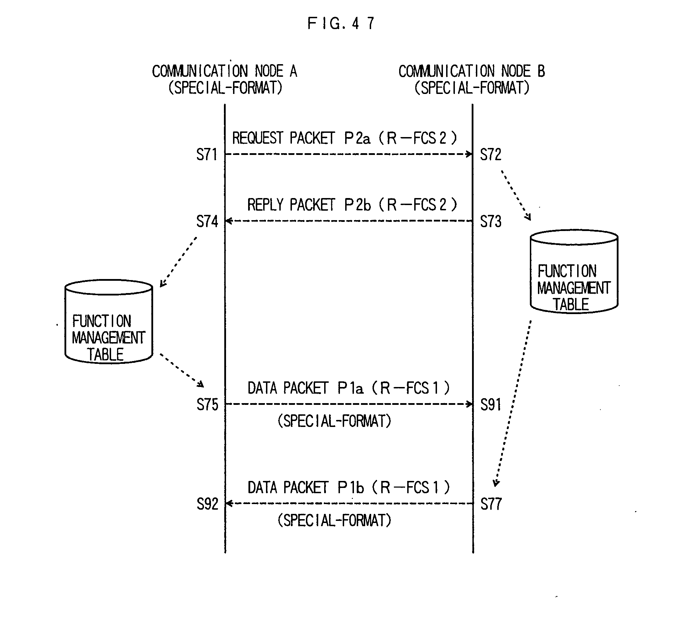

Fig. 47 shows Example 22 of the invention. In this example, each station discriminates between a data packet P2 (request packet P2a or reply packet P2b) for checking whether or not the other station is compatible with a special format and a standard-format or special-format data packet P1 and performs corresponding reception processing. For example, a standard-format data packet contains an ordinary FCS code, a special-format data packet contains an R-FCS1 code, and a data packet P2 contains an R-FCS2 code. As shown in Fig. 47, the procedure (S71-S74) that stations A and B follow to mutually recognize that they are special-format-compatible stations by exchanging request packets P2a and reply packets P2b and to register information to that effect in their own function management tables is the same as shown in Fig. 41. However, the request packets P2a and reply packets P2b contain R-FCS2 codes and can be received normally only by stations that are compatible with the special format.

To transmit a data packet P1a, the station A checks whether or not the destination is compatible with the special format by referring to its own function management table (S75). In the example of Fig. 47, the destination station B is compatible with the special format. Therefore, the station A generates a data packet P1 a according to the special format and transmits it to the station B (S75). Since an R-FCS1 code is set in this data packet P1a, the data packet P1 a can be received normally only by stations that are compatible with the special format. When receiving the data packet P1a, the station B recognizes that it is of the special format by error detection and processes it according to the (predetermined) definition of the special format (S91).

On the other hand, to transmit a data packet P1 b, the station B checks whether or not the destination is compatible with the special format by referring to its own function management table (S77). In the example of Fig. 47, the destination station A is compatible with the special format. Therefore, the station B generates a data packet P1b according to the special format and transmits it to the station A (S77). Since an R-FCS1 code is set in this data packet P1b, the data packet P1b can be received normally only by stations that are compatible with the special format. When receiving the data packet P1b, the station A recognizes that it is of the special format by error detection and processes it according to the (predetermined) definition of the special format (S92).

The communication function check processing for checking whether or not the other station is compatible with the special format and the data packet transmission/reception processing that are performed by the special-format-compatible station A and a special-format-incompatible station C are the same as shown in Fig. 42. Incidentally, if a receiving-side station is compatible with the special format, since the information that a data packet P1a is of the special format is communicated by means of a CRC code as shown in Fig. 47, the procedure of checking the source and checking the format of a received packet by referring to the function management table as in the example of Fig. 41 is dispensed with and hence the efficiency is increased. However, when receiving such a CRC-code-manipulated data packet, the special-format-incompatible station C judges that it is an erroneous packet. In current wireless LAN systems, this requires a longer carrier sensing time than in an ordinary case and lowers the transmission efficiently much. Therefore, where there exist special-format-compatible stations and special-format-incompatible stations exist in mixed form, the sequence of Fig. 41 is more efficient in which an ordinary FCS code is used irrespective of the format of a data packet.

### (Communication function check process of station A that corresponds to Example 22)

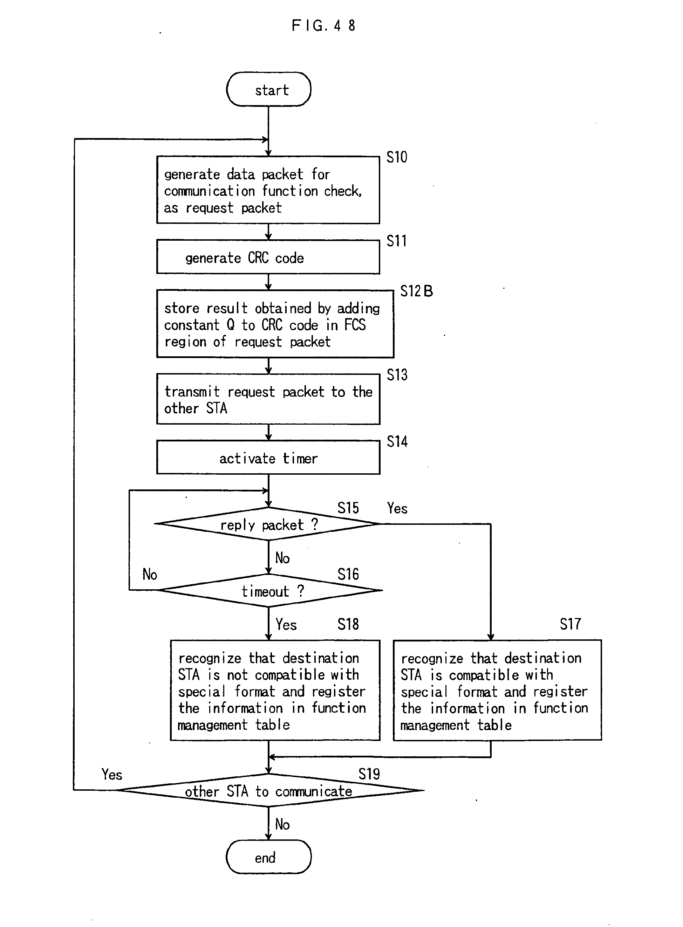

Fig. 48 shows a communication function check process of the station A that corresponds to Example 22. As shown in the figure, the station A generates, as a request packet, a data packet for a communication function check (S10). Then, the station A generates a CRC code for error detection for the request packet (S 11), and adds a constant Q to the CRC code and stores a resulting code in the FCS field of the request packet (S12B). Instead of adding the constant Q, processing of subtracting the constant Q or adding or subtracting another constant Q1 may be performed. The subsequent steps are the same as the corresponding steps of Example 21 shown in Fig. 43.

### (Data packet transmission process 1 of station A that corresponds to Example 22)

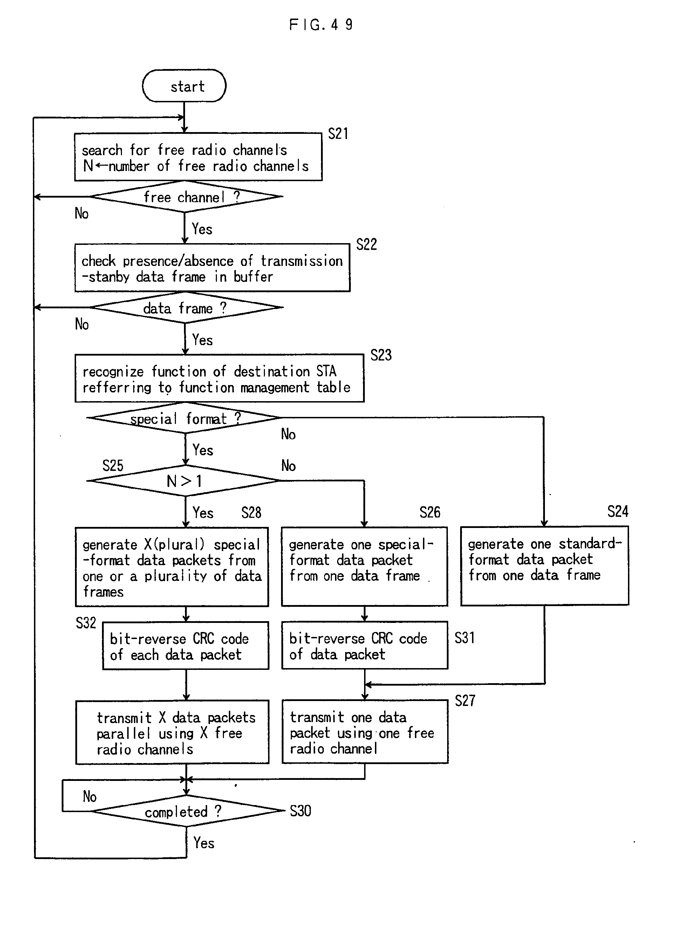

Fig. 49 shows a data packet transmission process 1 of the station A that corresponds to Example 22. The basic process is the same as in Example 21 (see Fig. 44). This process further includes steps S31 and S32 in which a bit-reversed version of a CRC code(s) obtained by the prescribed CRC operation is put into the FCS field(s) of special-format data packet(s) that was generated at step S26 or S28.

### (Data packet transmission process 2 of station A that corresponds to Example 22)

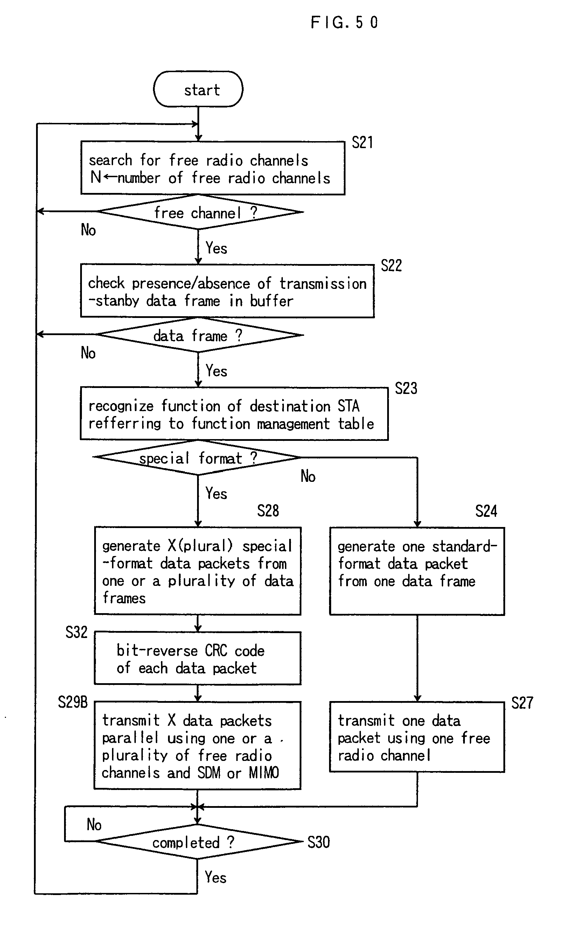

Fig. 50 shows a data packet transmission process 2 of the station B that corresponds to Example 22. The basic process is the same as in Example 21 (see Fig. 45). This process further includes step S32 in which a bit-reversed version of CRC codes obtained by the prescribed CRC operation is put into the FCS fields of special-format data packets that was generated at step S28.

### (Data packet transmission process 3 of station A that corresponds to Example 22)

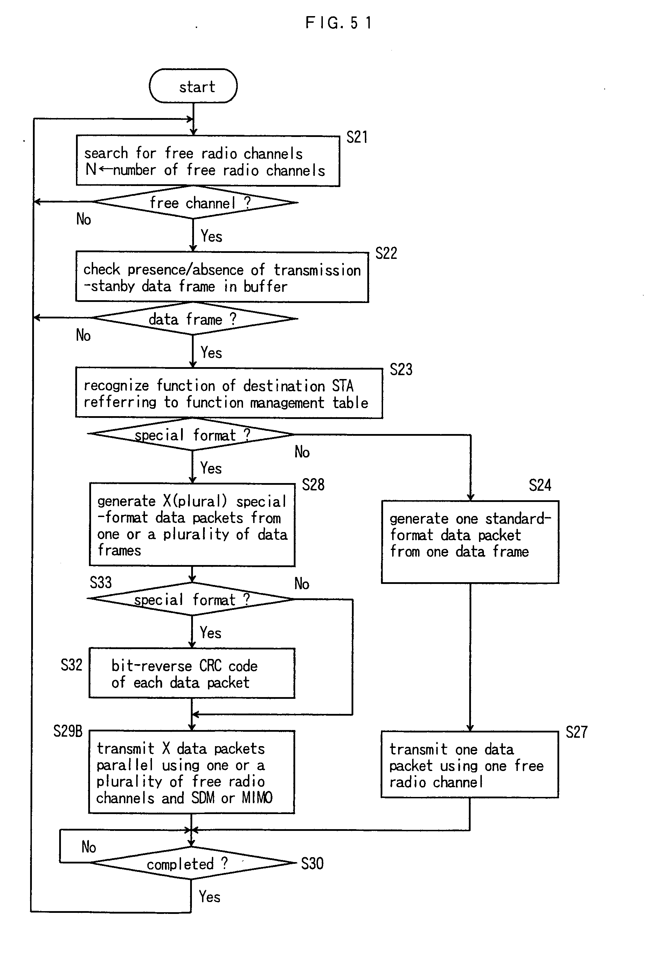

Fig. 51 shows a data packet transmission process 3 of the station B that corresponds to Example 22. The basic process is the same as in Example 21 (see Fig. 45). In this process, switching is made between the standard format and the special format in generating data packets at step S28 (step S33 is added). If the generated data packets are of the special format, the CRC codes in the FCS fields are bit-reversed (S32). If they are of the standard format, the CRC codes in the FCS fields are not altered.

With this measure, standard-format data packets can be transmitted even if the other station is compatible with the special format, in the case where it is not necessary to use the special format as in the case where, for example, in the transmitting side the number of free radio channels is one and the number of data frames in the buffer is equal to one. The use of the standard format increases the transmission efficiency.

### (Data packet transmission process 4 of station A that corresponds to Example 22)

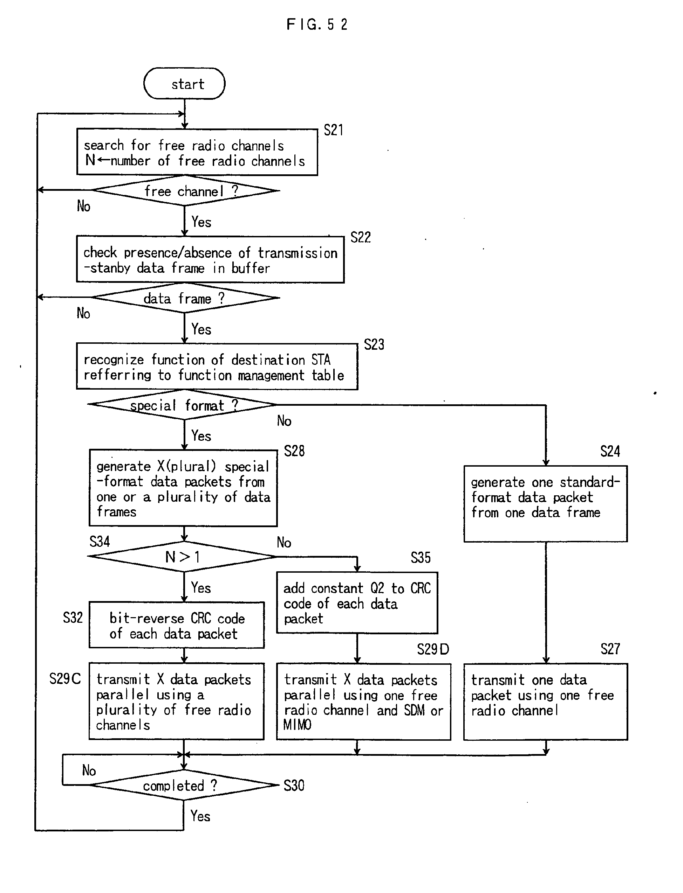

Fig. 52 shows a data packet transmission process 4 of the station B that corresponds to Example 22. The basic process is the same as in Example 21 (see Fig. 45). In this process, the transmission mode is switched for X data packets that were generated at step S28 depending on whether the number N of free radio channels is equal to one or greater than or equal to two (step S34 is added).

If the number N of free radio channels is greater than or equal to two, the CRC codes in the FCS fields of the data packets are bit-reversed (S32) and transmitted parallel by using a plurality of radio channels (S29C). On the other hand, if the number N of free radio channels is equal to one, a constant Q2 is added to the CRC codes in the FCS fields of the data packets (S35) and transmitted parallel by using a single radio channel and SDM or MIMO (S29D).

That is, the transmitting side switches, as appropriate, between the mode in which a plurality of data packets are transmitted parallel by using a plurality of radio channels and the mode in which a plurality of data packets are transmitted parallel by using SDM or MIMO. Where data packets are to be transmitted in the former mode, the CRC codes of their FCS fields are bit-reversed. Where data packets are to be transmitted in the latter mode, the constant Q2 is added to the CRC codes of their FCS fields. The above operations for the respective modes are just examples.

### (Data packet reception process 1 of station B that corresponds to Example 22)

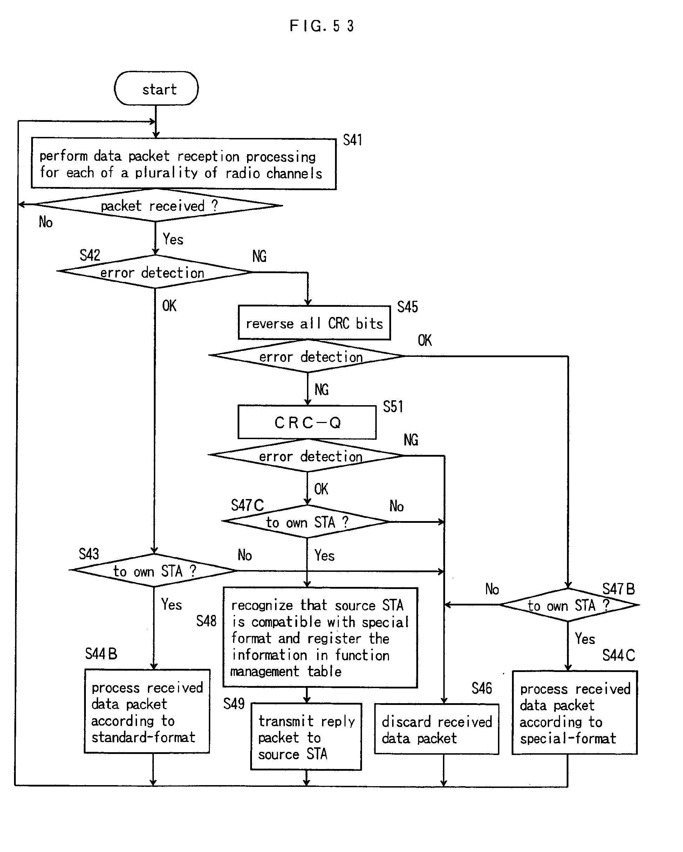

Fig. 53 shows a data packet reception process 1 of the station B that corresponds to Example 22. In this process, a standard-format data packet containing an ordinary CRC code in the FCS field, a special-format data packet containing a bit-reversed CRC code, and a data packet for a communication function check (request packet) containing a constant-Q-added CRC code are recognized sequentially and subjected to reception processing.

As shown in the figure, the station B to perform reception processing performs data packet reception processing repeatedly for each of a plurality of radio channels (S41). If a data packet is received, the station B performs error detection on the received data packet (S42). That is, the station B checks whether or not a result of the prescribed CRC operation performed on the data packet coincides with a CRC code contained in the FCS field.

The result of the CRC operation should coincide with the CRC code if the received data packet is of the standard format. However, non-coincidence is found if the data packet has a bit error or the like. Non-coincidence is always found in the case where a request packet or a special-format data packet is transmitted, because the transmitting side adds the constant Q at step S12B in Fig. 48 or bit-reverses the CRC code at step S31 or S32 in Fig. 49.

Therefore, if CRC code coincidence is detected, the station B checks whether or not the destination of the received data packet coincides with its own ID (S43). If the received data packet is directed to the station B, the station B processes the received data packet according to the standard format (S44B). If the received data packet is not directed to the station B, the station B discards it (S46).

If CRC code non-coincidence is detected, the station B subjects the CRC code to the inverse of the operation that was performed by the transmitting side at step S31 or S32 in Fig. 49. In this example, the station B reconstructs an original CRC code by reversing all the bits of the CRC code and checks whether or not the result coincides with a result of the CRC operation performed on the data packet (S45). If a special-format data packet is received, a bit reversal result should coincide with a CRC operation result and hence the station B checks whether or not the destination of the received data packet coincides with its own ID (S47B). If the received data packet is directed to the station B, the station B processes it according to the special format (S44C). On the other hand, if the received data packet is not directed to station B, the station B discards it (S46).

If a request packet is received, a bit reversal result should not coincide with a CRC operation result, the station B subjects the CRC code to the inverse of the operation that was performed by the transmitting side at step S12B in Fig. 48. In this example, the station B reconstructs an original CRC code by subtracting the constant Q from the CRC code and checks whether or not the result coincides with a result of the CRC operation performed on the data packet (S51). If the received data packet has a bit error, non-coincidence is detected even if the constant Q is subtracted from the CRC code and hence the station B discards the data packet (S46). On the other hand, if a request packet is received, a constant Q subtraction result should coincide with a CRC operation result and hence the station B checks whether or not the destination of the received request packet coincides with its own ID (S47C). If the received request packet is directed to the station B, the station B recognizes that the source station is compatible with the special format and registers information to that effect in its own function management table in such a manner that the information is correlated with a source station ID (S48). Then, the station B transmits a prescribed reply packet to the source station (S49). On the other hand, if the received request packet is not directed to the station B, the station B discards it (S46).

When a station that performs a conventional operation that is not compatible with the special format has received a request packet or a special format data packet, no problems occur because it simply discards the packet as an erroneous packet. That is, there occur no problems even in a system including special-format-compatible stations and special-format-incompatible stations in mixed form.

### (Data packet reception process 2 of station B that corresponds to Example 22)

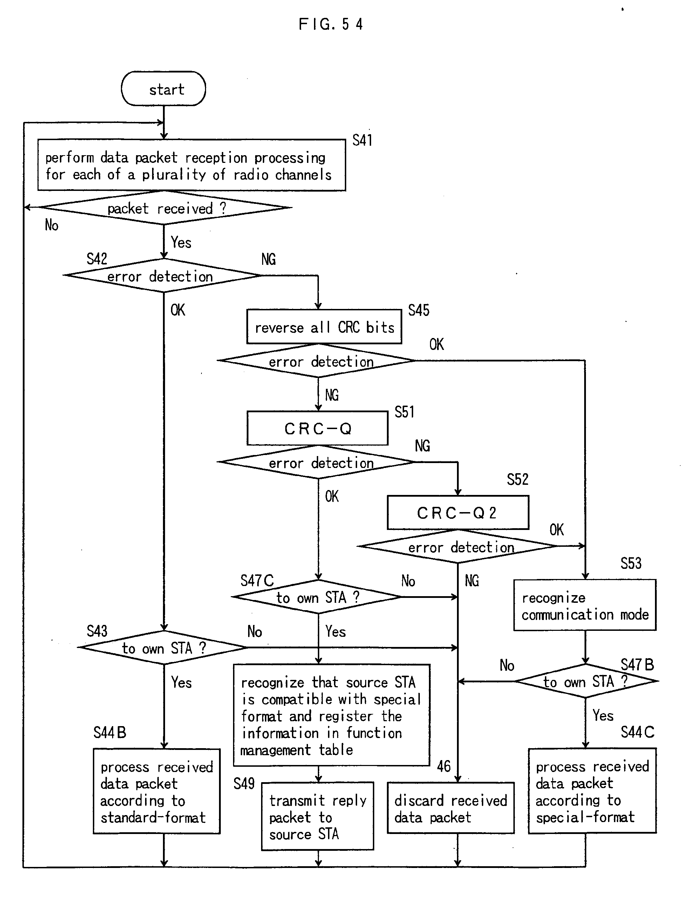

Fig. 54 shows a data packet reception process 2 of the station B that corresponds to Example 22. This process is such that steps that correspond to the data packet transmission process 4 of Fig. 52 and are executed depending on the type of parallel transmission (i.e., a plurality of radio channels or SDM or MIMO) are added to the reception process 1 that sequentially recognizes a standard-format data packet containing an ordinary CRC code in the FCS field, a special-format data packet containing a bit-reversed CRC code, and a data packet for a communication function check (request packet) containing a constant-Q-added CRC code.

That is, steps S52 and S53 are added to the reception process 1 of Fig. 53. At step S52, the constant Q2 is subtracted from the CRC code in the FCS field of the received data packet and then it is checked whether or not a resulting CRC code coincides with a data packet calculation value. At step S53, a communication mode is recognized by checking at which of steps S45 and S52 CRC code coincidence was detected. More specifically, if coincidence was detected at step S45, it means that the transmitting side executed step S32 in Fig. 52 and hence employed the communication mode using a plurality of radio channels. If coincidence was detected at step S52, it means that the transmitting side executed step S35 in Fig. 52 and hence employed the communication mode using SDM or MIMO.

In practice, the receiving-side station B automatically switches the ACK packet return method in accordance with the communication mode that is recognized at step S53. More specifically, if the transmitting side transmitted a plurality of data packets parallel using a plurality of radio channels, the receiving side returns an ACK packet for each of the data packets that are received by using the plurality of radio channels. If the transmitting side transmitted a plurality of data packets parallel using SDM or MIMO, the receiving side returns only a single ACK packet for all the plurality of data packets received simultaneously (neither SDM nor MIMO is employed).

### (Configuration of exemplary packet communication apparatus)

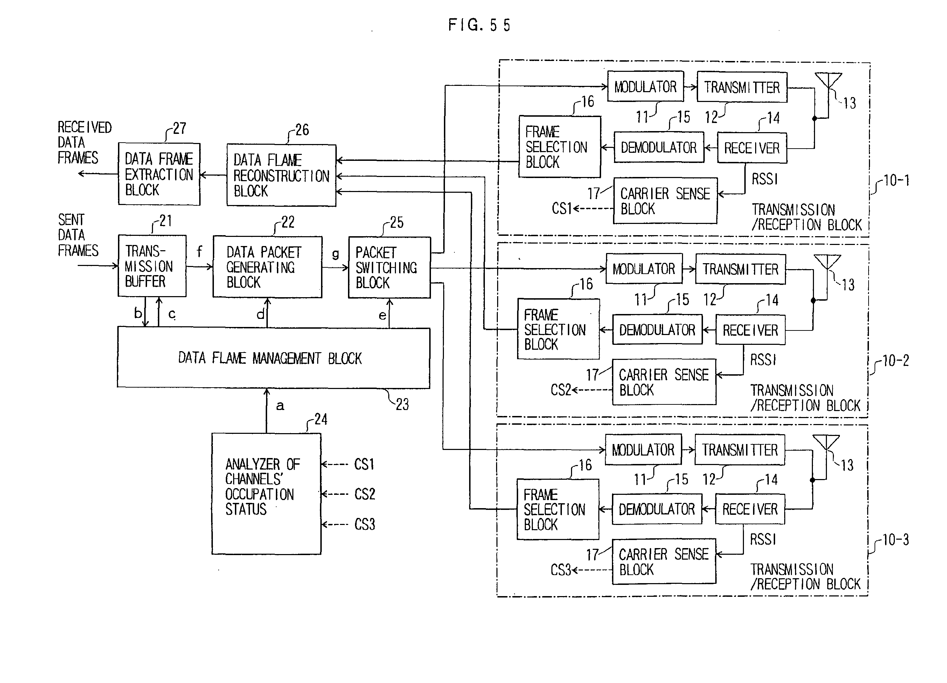

Fig. 55 shows the configuration of an exemplary packet communication apparatus according to the invention. Although this radio packet communication apparatus can transmit and receive three data packets parallel using three radio channels #1, #2, and #3, the parallelism number can be set arbitrarily. Where SDM or MIMO is employed for each radio channel, data packets can be transmitted and received parallel in a parallel transmission number that is equal to the sum of SDM or MIMO numbers of the respective radio channels. However, the following description will not deal with SDM or MIMO. The same is true of general packet communication apparatus that are wire-connected.

As shown in the figure, the radio packet communication apparatus is equipped with transmission/reception blocks 10-1, 10-2, and 10-3, a transmission buffer 21, a data packet generating block 22, a data frame management block 23, an analyzer 24 of channels' occupation status, a packet switching block 25, a data frame reconstruction block 26, and a data frame extraction block 27.

The transmission/reception blocks 10-1, 10-2, and 10-3 perform radio communications using the different radio channels #1, #2, and #3. The radio channels #1, #2, and #3 are independent of each other because they have different radio frequencies etc., and enable simultaneous radio communications using a plurality of radio channels. Each transmission/reception block 10 is equipped with a modulator 11, a transmitter 12, an antenna 13, a receiver 14, a demodulator 15, a frame selection block 16, and a carrier sense block 17.

Radio signals that are transmitted from another radio packet communication apparatus over different radio channels #1, #2, and #3 are input to the receivers 14 through the antennas 13 of the corresponding transmission/reception blocks 10-1, 10-2, and 10-3. The receiver 14 of each radio channel performs reception processing including frequency conversion, filtering, quadrature detection, and AD conversion on the received radio signal. Radio signals on a radio propagation path of the corresponding radio channel are always input to each receiver 14 while the antenna 13 connected thereto is not used for transmission. The receiver outputs an RSSI (received signal strength indication) signal representing received signal electric field strength of the corresponding radio channel to the carrier sense block 17. When a radio signal is received over the radio channel corresponding to the receiver 14, the receiver 14 outputs a baseband signal produced by the reception processing to the demodulator 15.

The demodulator 15 performs demodulation processing on the baseband signal inputted from the receiver 14 and outputs resulting data packets to the frame selection block 16. The frame selection block 16 performs a CRC check on the inputted data packets. If it is judged that a data packet has been received without causing an error, the frame selection block 16 judges whether or not the data packet is directed to its own station. That is, the frame selection block 16 checks whether the destination ID of each data packet coincides with the ID of its own station, and outputs data packets directed to its own station to the data frame reconstruction block 26. An acknowledgment packet generating block (not shown) generates an acknowledgment packet and sends it to the modulator 11 to start reply processing. In transmitting the acknowledgment packet, setting of a transmission rate and setting of a transmission mode (e.g., SDM or MIMO is not employed) may be made. On the other hand, a data packet that is not directed to the own station is discarded by the frame selection block 16.

The data frame reconstruction block 26 extracts data frames from data packets by using the above-described data frame reconstruction process, and outputs results to the data frame extraction block 27 as received data frames. The data frame extraction block 27 eliminates a header portion from each of the received data frames and outputs a remaining portion.

When inputting an RSSI signal, the carrier sense block 17 compares a received signal electric field strength value represented by the signal with a preset threshold value. The carrier sense block 17 judges that the assigned radio channel is free if a state continues that the received signal electric field strength is lower than the threshold value continuously in a prescribed period, and judges that the assigned radio channel is busy if not. The carrier sense blocks 17 corresponding to the respective radio channels output the judgment results as carrier sense results CS1-CS3. In each transmission /reception block 10, no RSSI signal is input to the carrier sense block 17 while the antenna 13 is in a transmitting state. If an antenna 13 is already in a transmitting state, another data packet cannot be transmitted by the same antenna 13 as a radio signal simultaneously with the data packet being transmitted. Therefore, if no RSSI signal is inputted, each carrier sense block 17 outputs a carrier sense result indicating that the assigned radio channel is busy.

Carrier sense results CS1-CS3 that are output from the carrier sense blocks 17 corresponding to the respective radio channels are input to the analyzer 24 of channels' occupation status. The analyzer 24 of channels' occupation status manages the occupation status of each radio channel on the basis of the carrier sense result corresponding to each radio channel, and communicates such information as free radio channels and the number of free channels to the data frame management block 23 (indicated by symbol a in Fig. 55).

On the other hand, data frames to be sent are input to and buffered by the transmission buffer 21. The data frames to be sent are one or a plurality of data frames. The transmission buffer 21 communicates the number of currently held data frames, ID information of destination radio packet communication apparatus, a data size, address information indicating positions on the buffer, and other information to the data frame management block 23, when necessary (indicated by symbol b).

The data frame management block 23 determines how to generate data packets from what data frames and what radio channels should be used for transmitting those data packets on the basis of information relating to data frames for each destination station ID that is communicated from the transmission buffer 21 and information relating to radio channels that is communicated from the analyzer 24 of channels' occupation status, and communicates respective results to the transmission buffer 21, the data packet generating block 22, and the packet switching block 25 (indicated by symbols c, d, and e). For example, if the number N of free radio channels is smaller than the number K of transmission-standby data frames in the transmission buffer 21, the data frame management block 23 determines to employ the number N of free radio channels as the number of data packets to be transmitted parallel, determines data frames to be transmitted from the K data frames so that they counts N × Dmax or less, and communicates address information indicating those data frames to the transmission buffer 21 (indicated by symbol c). The data frame management block 23 communicates, to the data packet generating block 22, information that is necessary for generation of N data packets from data frames that are input from the transmission buffer 21 (indicated by symbol d). The data frame management block 23 informs the packet switching block 25 of correspondence between N data packets to be generated by the data packet generating block 22 and free radio channels (indicated by symbol e).

The transmission buffer 21 outputs the output-specified data frames to the data packet generating block 22 (indicated by symbol f). The data packet generating block 22 generates data packets in the following manner. That is, the data packet generating block 22 generates a plurality of data blocks having the same packet time length (defined as a time required for transmitting a data packet) by extracting data fields from the respective data frames and performing frame patching after adding subheaders (described above) to those and adds, to the data blocks, header portions including control information such as ID information of the destination stations of the intended data packets and sequence numbers indicating order of the data frames and CRC codes (FCS portions) as error detection codes. In doing so, the data packet generating block 22 uses a CRC code that is suitable for the format, type, destination, etc. of each packet. The packet switching block 25 correlates the data packets inputted from the data packet generating block 22 with the respective radio channels.

As a result of the above correlation, data packets that are correlated with the radio channels #1, #2, and #3 are input to the modulators 11 in the transmission/reception blocks 10-1, 10-2, and 10-3, respectively. When inputting a data packet from the packet switching block 25, each modulator 11 performs prescribed modulation processing on the data packet and outputs a modulated data packet to the transmitter 12. Each transmitter 12 performs transmission processing including DA conversion, frequency conversion, filtering, and power amplification on the modulated data packet inputted from the modulator 11, and transmits the data packet from the antenna 13 over the corresponding radio channel.

### INDUSTRIAL APPLICABILITY

The packet communication method and the packet communication apparatus according to the invention enables transmission/reception between communication nodes of information for discrimination between a plurality of packets and hence enables processing that is suitable for channel access control schemes of the two communication nodes, the format of a data packet, and other factors. In addition, since a packet containing such information does not cause any special influence on the communication of a communication node that accommodates only conventional communication controls, a communication system can be constructed in which communication nodes that are compatible with new channel access control schemes or formats and conventional communication nodes exist in mixed form. For example, a system can be constructed in which communication nodes that are compatible with a special format according to which data packets are generated by division and patching of the data fields of data frames and communication nodes that are not compatible with the special format exist in mixed form.

## Claims

1. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
the second communication node's comparing an error detection code C generated by performing the prescribed error detection code operation on a received packet with an error detection code F1 contained in the FCS field of the received packet, performing reception processing on the received packet with an understanding that it is classified as the first packet if the error detection codes C and F1 coincide with each other, comparing the error detection code C generated by performing the prescribed error detection code operation on the received packet with an error detection code F2 obtained by performing an inverse operation for returning a result of the prescribed operation to an original on the error detection code F1 contained in the FCS field of the received packet, and performing reception processing on the received packet with an understanding that it is classified as the second packet if the error detection codes C and F2 coincide with each other.

2. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
the second communication node's comparing an error detection code C generated by performing the prescribed error detection code operation on a received packet with an error detection code F1 contained in the FCS field of the received packet and an error detection code F2 obtained by performing an inverse operation for returning a result of the prescribed operation to an original on the error detection code F1 contained in the FCS field of the received packet, performing reception processing on the received packet with an understanding that it is classified as the first packet if the error detection codes C and F1 coincide with each other, and performing reception processing on the received packet with an understanding that it is classified as the second packet if the error detection codes C and F2 coincide with each other.

3. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
the second communication node's comparing an error detection code C1 generated by performing the prescribed error detection code operation on a received packet with an error detection code F contained in the FCS field of the received packet, performing reception processing on the received packet with an understanding that it is classified as the first packet if the error detection codes C1 and F coincide with each other, comparing an error detection code C2 obtained by performing the prescribed operation on the error detection code generated by performing the prescribed error detection code operation on the received packet with the error detection code F contained in the FCS field of the received packet, and performing reception processing on the received packet with an understanding that it is classified as the second packet if the error detection codes C2 and F coincide with each other.

4. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
the second communication node's comparing an error detection code C1 generated by performing the prescribed error detection code operation on a received packet and an error detection code C2 obtained by performing the prescribed operation on the error detection code C1 with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

5. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet; and
the second communication node's comparing an error detection code C1 generated by performing the first error detection code operation on a received packet with an error detection code F contained in the FCS field of the received packet, performing reception processing on the received packet with an understanding that it is classified as the first packet if the error detection codes C1 and F coincide with each other, comparing an error detection code C2 generated by performing the second error detection code operation on the received packet with the error detection code F contained in the FCS field of the received packet, and performing reception processing on the received packet with an understanding that it is classified as the second packet if the error detection codes C2 and F coincide with each other.

6. A packet communication method for transmitting, between a plurality of communication nodes, a packet including a data field containing information to be transmitted and an FCS field containing an error detection code, **characterized by** comprising the steps of:
a first communication node's selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet; and
the second communication node's comparing an error detection code C1 generated by performing the first error detection code operation on a received packet and an error detection code C2 generated by performing the second error detection code operation on the received packet with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

7. The packet communication method according to any one of claims 1 to 4, **characterized in that** the prescribed operation to be performed on the first error detection code is at least one of reversing all bits of the first error detection code, reversing partial bits of the first error detection code, adding a prescribed value to the first error detection code, and subtracting a prescribed value from the first error detection code.

8. The packet communication method according to claim 7, **characterized in that** two or more kinds of packets are generated as the second packet containing, in the FCS field, the second error detection code obtained by performing the prescribed operation on the first error detection code by combining prescribed operations and addition and subtraction of plural kinds of prescribed values, and three or more kinds of packets including the first packet are transmitted and received between the first and second communication nodes.

9. The packet communication method according to claim 5 or 6, **characterized in that** the first error detection code operation and the second error detection code operation employ different parameters to produce different error detection codes, and three or more kinds of packets containing, in the FCS fields, error detection codes generated by using three or more kinds of parameters, respectively, are transmitted and received between the first and second communication nodes.

10. A packet communication method **characterized in that** three or more kinds of packets are generated by combining the kind of prescribed operation to be performed on the first error detection code recited in any one of claims 1 to 4 and the kinds of error detection code operations recited in claim 5 or 6, and are transmitted and received between the first and second communication nodes.

11. The packet communication method according to any one of claims 1 to 10, **characterized in:**
**that** the first and second packets or the three or more kinds of packets are different from each other in frame format;
**that** the first communication node puts, into the FCS field of a packet to be transmitted, an error detection code generated by an operation corresponding to a frame format of the packet to be transmitted; and
**that** the second communication node recognizes a frame format of a received packet by performing an operation on an error detection code of the received packet, and performs reception processing on the received packet on the basis of the recognized frame format.

12. The packet communication method according to claim 11, **characterized in that** the frame format corresponding to the error detection code is a prescribed, standard frame format or an unprescribed, special frame format.

13. The packet communication method according to claim 12, **characterized in that** a data portion of a packet of the special frame format includes, together with fragments obtained by dividing a data frame or a plurality of data frames, a field containing information that is necessary when the second communication node reconstructs a corresponding data frame from the data packet concerned.

14. The packet communication method according to claim 13, **characterized in that** a plurality of data packets are generated by performing division, patching, or aggregation on the data frame or frames, and each of the data packets includes a field containing information that is necessary for reconstruction of a data frame.

15. The packet communication method according to claim 14, **characterized in that** the plurality of data packets are transmitted parallel by using a plurality of radio channels, a single radio channel and SDM or MIMO, or a plurality of radio channels and SDM or MIMO.

16. The packet communication method according to claim 15, **characterized in that** the plurality of data packets are generated so as to have the same packet time length defined as a time necessary for a transmission by adjusting a packet size ratio of the data packets in accordance with a transmission rate ratio of the radio channels.

17. The packet communication method according to claim 12, **characterized in that** a packet of the special frame format includes a field containing control information of the communication node.

18. The packet communication method according to claim 12, **characterized in that** a packet of the special frame format is provided with a field containing control information of the communication node when a packet of the standard frame format does not have a data portion.

19. The packet communication method according to claim 12, **characterized in that** a packet of the special frame format is provided with a field containing transmission data of the communication node when a packet of the standard frame format does not have a data portion.

20. The packet communication method according to claim 12, **characterized in that** a packet of the special frame format has an unprescribed frame header.

21. The packet communication method according to claim 17 or 18, **characterized in that** the control information is traffic information of the communication node.

22. The packet communication method according to claim 17 or 18, **characterized in that** the control information is information that is necessary for handover processing of the communication node.

23. The packet communication method according to claim 17 or 18, **characterized in that** the control information is a parameter that is necessary for connection of the communication node to a network.

24. The packet communication method according to claim 17 or 18, **characterized in that** the control information is information that is necessary for change of a channel access procedure of the communication node.

25. The packet communication method according to claim 17 or 18, **characterized in that** the control information is information that relates to a channel allocation time of the communication node.

26. The packet communication method according to claim 17 or 18, **characterized in that** the control information is propagation path information, a transmission rate, or information relating to a transmission power control that is detected by the communication node.

27. The packet communication method according to any one of claims 1 to 10, **characterized in:**
**that** the first and second packets or the three or more kinds of packets have error detection codes generated by operations that are different from each other so as to correspond to respective destinations;
**that** the first communication node puts, into the FCS field of a packet to be transmitted, an error detection code generated by an operation corresponding to a destination of the packet to be transmitted; and
**that** the second communication node performs reception processing on a packet directed to itself that is recognized by performing an operation on an error detection code of a received packet.

28. The packet communication method according to any one of claims 1 to 10, **characterized in:**
**that** the first and second packets or the three or more kinds of packets have error detection codes generated by operations that are different from each other so as to correspond to the respective kinds of packets;
**that** the first communication node puts, into the FCS field of a packet to be transmitted, an error detection code generated by an operation corresponding to a kind of the packet to be transmitted; and
**that** the second communication node performs reception processing on a packet of a kind that is recognized by performing an operation on an error detection code of a received packet.

29. The packet communication method according to claim 28, **characterized in that** the kind of a packet is recognized by an identifier that is contained in the packet and indicates the kind of the packet, and error correction codes corresponding to the respective kinds of packets are used.

30. The packet communication method according to claim 29, **characterized in that** when recognizing reception of a prescribed packet by performing an operation on an error detection code of a received packet, the second communication node performs reply processing to the received packet and manages the first communication node as a communication node capable of special processing.

31. The packet communication method according to claim 29, **characterized in that** when recognizing reception of a prescribed packet by performing an operation on an error detection code of a received packet, the second communication node communicates information indicating presence of a communication node capable of special processing to an upper layer.

32. The packet communication method according to claim 28, **characterized in that** the kind of a packet corresponds to information indicating an encryption key of an encrypted data packet, and error detection codes corresponding to respective encryption keys are used.

33. A packet communication apparatus for transmitting, between a plurality of communication nodes, a packet including a data field containing information to be transmitted and an FCS field containing an error detection code, **characterized in:**
**that** a first communication node comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
**that** the second communication node comprises means for comparing an error detection code C generated by performing the prescribed error detection code operation on a received packet with an error detection code F1 contained in the FCS field of the received packet, performing reception processing on the received packet with an understanding that it is classified as the first packet if the error detection codes C and F1 coincide with each other, comparing the error detection code C generated by performing the prescribed error detection code operation on the received packet with an error detection code F2 obtained by performing an inverse operation for returning a result of the prescribed operation to an original on the error detection code F1 contained in the FCS field of the received packet, and performing reception processing on the received packet with an understanding that it is classified as the second packet if the error detection codes C and F2 coincide with each other.

34. A packet communication apparatus for transmitting, between a plurality of communication nodes, a packet including a data field containing information to be transmitted and an FCS field containing an error detection code, **characterized in**
**that** a first communication node comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
**that** the second communication node comprises means for comparing an error detection code C generated by performing the prescribed error detection code operation on a received packet with an error detection code F1 contained in the FCS field of the received packet and an error detection code F2 obtained by performing an inverse operation for returning a result of the prescribed operation to an original on the error detection code F1 contained in the FCS field of the received packet, performing reception processing on the received packet with an understanding that it is classified as the first packet if the error detection codes C and F1 coincide with each other, and performing reception processing on the received packet with an understanding that it is classified as the second packet if the error detection codes C and F2 coincide with each other.

35. A packet communication apparatus for transmitting, between a plurality of communication nodes, a packet including a data field containing information to be transmitted and an FCS field containing an error detection code, **characterized in:**
**that** a first communication node comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
**that** the second communication node comprises means for comparing an error detection code C1 generated by performing the prescribed error detection code operation on a received packet with an error detection code F contained in the FCS field of the received packet, performing reception processing on the received packet with an understanding that it is classified as the first packet if the error detection codes C1 and F coincide with each other, comparing an error detection code C2 obtained by performing the prescribed operation on the error detection code generated by performing the prescribed error detection code operation on the received packet with the error detection code F contained in the FCS field of the received packet, and performing reception processing on the received packet with an understanding that it is classified as the second packet if the error detection codes C2 and F coincide with each other.

36. A packet communication apparatus for transmitting, between a plurality of communication nodes, a packet including a data field containing information to be transmitted and an FCS field containing an error detection code, **characterized in:**
**that** a first communication node comprises means for selectively transmitting, to a second communication node, a first packet containing, in the FCS field, a first error detection code generated by performing a prescribed error detection code operation on a transmission packet or a second packet containing, in the FCS field, a second error detection code obtained by performing a prescribed operation on the first error detection code; and
**that** the second communication node comprises means for comparing an error detection code C1 generated by performing the prescribed error detection code operation on a received packet and an error detection code C2 obtained by performing the prescribed operation on the error detection code C1 with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

37. A packet communication apparatus for transmitting, between a plurality of communication nodes, a packet including a data field containing information to be transmitted and an FCS field containing an error detection code, **characterized in:**
**that** a first communication node comprises means for selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet; and
**that** the second communication node comprises means for comparing an error detection code C1 generated by performing the first error detection code operation on a received packet with an error detection code F contained in the FCS field of the received packet, performing reception processing on the received packet with an understanding that it is classified as the first packet if the error detection codes C1 and F coincide with each other, comparing an error detection code C2 generated by performing the second error detection code operation on the received packet with the error detection code F contained in the FCS field of the received packet, and performing reception processing on the received packet with an understanding that it is classified as the second packet if the error detection codes C2 and F coincide with each other.

38. A packet communication apparatus for transmitting, between a plurality of communication nodes, a packet including a data field containing information to be transmitted and an FCS field containing an error detection code, **characterized in:**
**that** a first communication node comprises means for selectively transmitting, to a second communication node, a first packet containing, in the FCS field, an error detection code generated by performing a first error detection code operation on a transmission packet or a second packet containing, in the FCS field, an error detection code generated by performing a second error detection code operation on the transmission packet; and
**that** the second communication node comprises means for comparing an error detection code C1 generated by performing the first error detection code operation on a received packet and an error detection code C2 generated by performing the second error detection code operation on the received packet with an error detection code F contained in the FCS field of the received packet, performing reception processing on the received packet with an understanding that it is classified as the first packet if the error detection codes C1 and F coincide with each other, and performing reception processing on the received packet with an understanding that it is classified as the second packet if the error detection codes C2 and F coincide with each other.

39. The packet communication apparatus according to any one of claims 33 to 36, **characterized in that** the prescribed operation to be performed on the first error detection code is at least one of reversing all bits of the first error detection code, reversing partial bits of the first error detection code, adding a prescribed value to the first error detection code, and subtracting a prescribed value from the first error detection code.

40. The packet communication apparatus according to claim 39, **characterized in that** two or more kinds of packets are generated as the second packet containing, in the FCS field, the second error detection code obtained by performing the prescribed operation on the first error detection code by combining prescribed operations and addition and subtraction of plural kinds of prescribed values, and three or more kinds of packets including the first packet are transmitted and received between the first and second communication nodes.

41. The packet communication apparatus according to claim 37 or 38, **characterized in that** the first error detection code operation and the second error detection code operation employ different parameters to produce different error detection codes, and three or more kinds of packets containing, in the FCS fields, error detection codes generated by using three or more kinds of parameters, respectively, are transmitted and received between the first and second communication nodes.

42. A packet communication apparatus **characterized in that** three or more kinds of packets are generated by combining the kind of prescribed operation recited in any one of claims 33 to 36 to be performed on the first error detection code and the kinds of error detection code operations recited in claim 37 or 38, and are transmitted and received between the first and second communication nodes.

43. The packet communication apparatus according to any one of claims 33 to 42, **characterized in:**
**that** the first and second packets or the three or more kinds of packets are different from each other in frame format;
**that** the first communication node further comprises means for putting, into the FCS field of a packet to be transmitted, an error detection code generated by an operation corresponding to a frame format of the packet to be transmitted; and
**that** the second communication node further comprises means for recognizing a frame format of a received packet by performing an operation on an error detection code of the received packet, and for performing reception processing on the received packet on the basis of the recognized frame format.

44. The packet communication apparatus according to claim 43, **characterized by** further comprising means for generating, as the frame format corresponding to the error detection code, a prescribed, standard frame format or an unprescribed, special frame format.

45. The packet communication apparatus according to claim 44, **characterized by** further comprising means for generating a packet of the special frame format that includes, in a data portion, together with fragments obtained by dividing a data frame or a plurality of data frames, a field containing information that is necessary when the second communication node reconstructs a corresponding data frame from the data packet concerned.

46. The packet communication apparatus according to claim 45, **characterized by** further comprising means for generating a plurality of data packets by performing division, patching, or aggregation on the data frame or frames, and for generating a packet or packets in which each of the data packets includes a field containing information that is necessary for reconstruction of a data frame.

47. The packet communication apparatus according to claim 46, **characterized by** further comprising means for parallel transmitting the plurality of data packets by using a plurality of radio channels, a single radio channel and SDM or MIMO, or a plurality of radio channels and SDM or MIMO.

48. The packet communication apparatus according to claim 47, **characterized by** further comprising means for generating the plurality of data packets so that they have the same packet time length defined as a time necessary for a transmission by adjusting a packet size ratio of the data packets in accordance with a transmission rate ratio of the radio channels.

49. The packet communication apparatus according to claim 44, **characterized by** further comprising means for generating, as a packet of the special frame format, a packet that includes a field containing control information of the communication node.

50. The packet communication apparatus according to claim 44, **characterized by** further comprising means for generating, as a packet of the special frame format, a packet that is provided with a field containing control information of the communication node when a packet of the standard frame format does not have a data portion.

51. The packet communication apparatus according to claim 44, **characterized by** further comprising means for generating, as a packet of the special frame format, a packet that is provided with a field containing transmission data of the communication node when a packet of the standard frame format does not have a data portion.

52. The packet communication apparatus according to claim 44, **characterized by** further comprising means for generating, as a packet of the special frame format, a packet having an unprescribed frame header.

53. The packet communication apparatus according to claim 45 or 50, **characterized by** further comprising means for measuring traffic information of the communication node and using it as the control information.

54. The packet communication apparatus according to claim 49 or 50, **characterized by** further comprising means for using, as the control information, information that is necessary for handover processing of the communication node.

55. The packet communication apparatus according to claim 49 or 50, **characterized by** further comprising means for using, as the control information, a parameter that is necessary for connection of the communication node to a network.

56. The packet communication apparatus according to claim 49 or 50, **characterized by** further comprising means for using, as the control information, information that is necessary for change of a channel access procedure of the communication node.

57. The packet communication apparatus according to claim 49 or 50, **characterized by** further comprising means for using, as the control information, information that relates to a channel allocation time of the communication node.

58. The packet communication apparatus according to claim 49 or 50, **characterized by** further comprising means for using, as the control information, propagation path information, a transmission rate, or information relating to a transmission power control that is detected by the communication node.

59. The packet communication apparatus according to any one of claims 33 to 42, **characterized in:**
**that** the first and second packets or the three or more kinds of packets have error detection codes generated by operations that are different from each other so as to correspond to respective destinations;
**that** the first communication node further comprises means for putting, into the FCS field of a packet to be transmitted, an error detection code generated by an operation corresponding to a destination of the packet to be transmitted; and
**that** the second communication node further comprises means for performing reception processing on a packet directed to itself that is recognized by performing an operation on an error detection code of a received packet.

60. The packet communication apparatus according to any one of claims 33 to 42, **characterized in:**
**that** the first and second packets or the three or more kinds of packets have error detection codes generated by operations that are different from each other so as to correspond to the respective kinds of packets;
**that** the first communication node further comprises means for putting, into the FCS field of a packet to be transmitted, an error detection code generated by an operation corresponding to a kind of the packet to be transmitted; and
**that** the second communication node further comprises means for performing reception processing on a packet of a kind that is recognized by performing an operation on an error detection code of a received packet.

61. The packet communication apparatus according to claim 60, **characterized in that** the kind of a packet is recognized by an identifier that is contained in the packet and indicates the kind of the packet, and **characterized by** further comprising means for using the error correction codes corresponding to the respective kinds of packets.

62. The packet communication apparatus according to claim 61, **characterized in that** the second communication node further comprises means for performing reply processing to a received packet and managing the first communication node as a communication node capable of special processing when recognizing reception of a prescribed packet by performing an operation on an error detection code of the received packet.

63. The packet communication apparatus according to claim 61, **characterized in that** the second communication node further comprises means for communicating information indicating presence of a communication node capable of special processing to an upper layer when recognizing reception of a prescribed packet by performing an operation on an error detection code of a received packet.

64. The packet communication apparatus according to claim 60, **characterized in that** the kind of a packet corresponds to information indicating an encryption key of an encrypted data packet, and **characterized by** further comprising means for using error detection codes corresponding to respective encryption keys.
